# EUROPEAN PATENT SPECIFICATION

(11) **EP 1 741 619 B1**
(45) Date of publication and mention of the grant of the patent: **26.08.2009**
(21) Application number: 06013657.9
(22) Date of filing: 30.06.2006
(51) Int. Cl.: B62D 25/20, B62D 21/15, B62D 21/02, B60J 5/06

(54) **Underbody structure of sliding-door vehicle**
Unterbodenaufbau von einem Kraftfahrzeug mit Schiebetüren
Bas de caisse de véhicle à portes coulissantes

(30) Priority: 04.07.2005 JP 2005194516; 11.07.2005 JP 2005201426; 13.07.2005 JP 2005204039
(43) Date of publication of application: 10.01.2007
(73) Proprietor: Mazda Motor Corporation, Aki-gun, Hiroshima (JP)
(72) Inventor: Okana, Fumio, Aki-gun, Hiroshima (JP); Sakiyama, Noritaka, Aki-gun, Hiroshima (JP)
(74) Representative: Laufhütte, Dieter

(56) References cited:
- EP-A1- 0 100 455
- EP-A1- 1 092 574
- EP-A2- 0 101 971

## Description

The present invention relates generally to an underbody structure of a vehicle having a sliding side door and, more specifically to an underbody structure of a sliding-door vehicle featuring an increased stiffness to resist a side impact load.

### List of the prior art:

[Patent Document 1(PD1)] Japanese Unexamined Patent Publication No. 2005-1473

Conventionally known motor vehicles having a boxlike body, such as vans and mini-vans, are often provided with a sliding side door. In this kind of vehicle having a sliding side door, the door is supported at a lower part thereof by a side sill which extends parallel to a longitudinal centerline of the vehicle. The side sill supporting the lower part of the door typically includes an outer sill part which is shaped to form a slide rail accommodating part having a longitudinally elongate groove opening to the interior of the vehicle.

The side sill is, however, an important member of a vehicle body structure because that should bear a side impact load in the event of a lateral collision. If the slide rail accommodating part is formed in the outer sill part as stated above, a significant reduction would occur in lateral stiffness of the side sill and, as a consequence, the side sill would not resist the side impact load and would easily be bend inwardly.

To solve this problem, PD1 proposes a structure intended to provide increased lateral stiffness of a side sill and to prevent the side sill from bending inwardly. Specifically, the proposed structure includes a laterally extending cross member whose outer end is attached to a protruding part of an inner sill part bulging inward the vehicle to form a slide rail accommodating part, and an inner end of the cross member is attached to a frame member longitudinally extending along with the vehicle. The cross member and the frame member are disposed beneath a floor panel.

Meanwhile, the floor panel should preferably be located at a low position to provide a passenger compartment with wide space. The side sill is, however, unable to place very low in order to prevent the side sill from bumping against road surfaces or the like. One approach to providing a wide vehicle interior while reducing the risk of bumping against the road surface or other obstacles is to locate the side sill at a position higher than the floor panel.

Even with this approach, the stiffness of the side sill would decrease if the vehicle employs a sliding side door.

If the side sill is located at a position higher than the floor panel as mentioned above, it is impossible to increase the lateral stiffness of the side sill by means of a cross member and a frame member affixed to the bottom side of the floor panel as in the aforementioned structure proposed in PD1.

It might be possible to affix the cross member and the longitudinally extending frame member to the top of the floor panel by modifying the structure of PD1 in order to increase the lateral stiffness of the side sill. The longitudinal frame member affixed to the top of the floor panel makes it impossible to provide a wide vehicle interior by lowering the floor panel. Moreover, it is likely that the frame member simply affixed to the floor panel is not strong enough to resist a large side impact load which can occur in the event of a severe side crash.

An underbody structure of a sliding-door vehicle according the preamble of claim 1 is known from EPO 100 455 A1.

Accordingly, it is an object of the present invention to provide an underbody structure of a vehicle having a sliding side door, in which a floor panel is located at a position lower than a side sill to provide a wide vehicle interior, yet achieves increased lateral stiffness of the side sill capable of sturdily resisting a side impact load which may act on the vehicle.

The present invention is directed to an underbody structure of a sliding-door vehicle provided with: a side sill extending parallel to a longitudinal centerline of the vehicle at a lower end of a side door opening formed in a vehicle body; a floor panel attached to a lower part of the side sill forming a floor of a passenger compartment; a center rib formed at a center of the floor panel so projected as to extend along with the longitudinal centerline of the vehicle; and inner and outer sill parts which form the side sill. The inner sill part forms a rail accommodating part which accommodates a lower rail that holds a lower part of the sliding side door. This structure is also provided with a protruding part and a cross member. The protruding part is formed on the inner sill part and is so bulging to the interior of the vehicle to form the rail accommodating part. The cross member extends along a lateral direction of the vehicle on the floor panel and interconnects the protruding part of the inner sill part and the center rib of the floor panel. According to this underbody structure, the laterally extending cross member connects the protruding part formed on the inner sill part of the side sill to the center rib formed on the floor panel, so that lateral stiffness of the side sill can be increased with the aid of the center rib. This structure makes it possible to increase the lateral stiffness of the side sill which is mostly located above the floor panel by effectively utilizing the existing center rib which extends along with longitudinal centerline of the vehicle. Especially because the cross member is attached to the protruding part of the side sill, it is possible to support sturdily the side sill at the protruding part where side impact loads most severely apply on the side sill. Therefore, the underbody structure of the present invention can further increase the lateral stiffness of the side sill and withstand reliably the side impact load applying on the vehicle, yet providing a passenger compartment with wide space by locating the side sill at a position higher than the floor panel.

The cross member is not limited to a specific shape but may be any member in various configurations such as a closed cross section, an open cross section or a round cross section, provided that the cross member extends along the lateral direction of the vehicle on the floor panel and interconnects the protruding part of the inner sill part and the center rib.

In one aspect of the present invention, the center rib is higher than the side sill. According to this structure, the center rib can reliably maintain its stiffness to resist the side impact load. This serves to further enhance the lateral stiffness of the side sill and prevent the side sill from bending in a reliable fashion.

In another aspect of the present invention, a vertically extending pillar stands on an upper part of the side sill, and a lower end portion of an inner pillar part constituting the pillar is shaping an extended part which is laterally extending into the interior of the vehicle and is covering the protruding part of the inner sill part to join to the cross member.

According to this structure, the pillar has the extended part which extends laterally into the interior of the vehicle and is covering the protruding part of the inner sill part to join to the cross member. Consequently, it is possible to decrease inward deformation of the protruding part and increase the lateral stiffness of the side sill by utilizing the stiffness of the pillar. Since the pillar is also joining to the cross member through the extended part provided at the lower end portion, it is possible to prevent the lower end portion of the pillar from deforming into the vehicle interior and the pillar from deforming due to a side impact load.

In another aspect of the present invention, the extended part of the inner pillar part extends beside the protruding part.

According to this structure, the extended part enable to receive not only the side impact load applied to the side sill but also the side impact load applied to the sliding side door, so that the underbody structure serves to further increase the stiffness of the side sill.

In another aspect of the present invention, the underbody structure further includes a reinforcement member laterally extending below the rail accommodating part which is located within the protruding part of the inner sill part, the reinforcement member being located to overlap the cross member in side view.

According to this structure, the laterally extending reinforcement member is provided below the rail accommodating part within the protruding part of the side sill in such a way that the reinforcement member overlaps the cross member in side view, so that impact loads occurring in the event of a lateral collision are transmitted directly to the cross member via the reinforcement member. Also, since the cross member is attached to the highly rigid center rib, increased stiffness is imparted to the cross member to resist the impact loads. Therefore, in the event of a lateral collision, the side impact loads would be applied to the rigid cross member in a reliable fashion notwithstanding deformation of the protruding part or the like. Accordingly, the underbody structure makes it possible to increase the lateral stiffness of the side sill by joining the laterally extending cross member to the protruding part of the side sill and reliably withstand the side impact load acting on the vehicle in a more reliable fashion.

The aforementioned reinforcement member is not limited to a specific shape but may be any member in various configurations such as a hat-shaped cross section or an L-shaped cross section, provided that this member extends along the lateral direction of the vehicle.

In another aspect of the present invention, the cross member is a member which is generally hat-shaped cross section having a pair of flanges attached on the floor panel and which has an upper portion whose height is determined such that the upper portion of the cross member faces to a side wall of the reinforcement member.

According to this structure, the cross member having a generally hat-shaped cross section is reliably attached to the floor panel and the upper portion of the cross member faces to the side wall of the reinforcement member. Therefore, the upper portion of the cross member, which enhances the highest anti-buckling performance, receives a side impact load from the reinforcement member where the side impact load would directly be applied. This makes it possible to effectively use the reinforcement and the cross members as a member which increases the lateral stiffness of the side sill so that the underbody structure can perform an increased effect of preventing the side sill from bending in a reliable fashion.

In another aspect of the present invention, the aforementioned reinforcement member is a laterally extending member having a boxlike shape.

According to this structure, the reinforcement member is formed into a laterally extending boxlike shape, so that the reinforcement member is strengthened enough to transmit a side impact load input through the side sill to the cross member in a reliable fashion. Since the side impact load is more reliably transmitted to the cross member in this way, the side sill enables to further enhancement in the lateral stiffness. Accordingly, the underbody structure performs a yet increased effect of preventing the side sill from bending inwardly.

In another aspect of the present invention, the aforementioned reinforcement member is attached to a bottom surface of the rail accommodating part.

According to this structure, it is possible to increase stiffness of the rail accommodating part by the reinforcement member. This structure imparts increased stiffness to the rail accommodating part to support the sliding side door. In addition, as it is unnecessary to join the reinforcement member to the outer sill part, the provision of the reinforcement member does not jeopardize external appearance of the side sill.

In another aspect of the present invention, the floor panel is so attached to the inner sill part as to form a joint part located at a low position of the inner sill part so that the protruding part of the inner sill part projects above the floor panel.

According to this structure, the floor panel is attached at the lower portion of the inner sill part, so that the joint part extends below the protruding part at right angles to a bulging direction thereof. Thus, it is possible to attach the floor panel to the side sill without forming a recessed part in a lateral end of the floor panel at a corresponding portion facing the protruding part. For this reason, the floor panel can be formed into a simple shape, such as a straight ends. This makes it possible to assure the versatility of the floor panel of the present invention in use of different vehicle models. Since the floor panel is attached to the inner sill part at the lower portion thereof, it is possible to locate the floor panel at a low position and thereby provide a passenger compartment with wide space. Accordingly, the aforementioned underbody structure of the present invention makes it possible to improve assembling efficiency without deteriorating sealability between the floor panel and the side sill even when the protruding part bulging to the interior of the vehicle is formed on the inner sill part.

In another aspect of the present invention, the underbody structure of the sliding-door vehicle further includes a support member placed between the protruding part of the inner sill part and the floor panel to support the protruding part.

According to this structure, the protruding part of the inner sill part is sturdily supported by the aforementioned support member mounted on the floor panel, so that it is possible to reliably prevent the vertical displacement of the protruding part formed in a cantilever fashion. This structure improves the protruding part to be capable in withstanding the vertical load, and therefore, the protruding part would not produce vibratory motion even when the weight of the sliding side door or other load is applied on the protruding part through the rail accommodating part. It is appreciated from the above that the underbody structure thus configured serves to increase the stiffness of the protruding part even when the protruding part is formed in a cantilever fashion.

In another aspect of the present invention, the aforementioned support member is made of a protrusion projecting upward from the floor panel.

According to this structure, the aforementioned protrusion projecting upward from the floor panel upholds the protruding part of the inner sill part, so that the protruding part is supported by the floor panel. Because the protruding part is integrally supported by the floor panel through the support member in this way, strength of the protruding part is increased in a reliable fashion.

In another aspect of the present invention, the floor panel is formed therein a hole for spot welding at the proximity of the protruding part of the inner sill part, and the support member is a member having a generally hat-shaped cross section placed between the hole and the protruding part, the support member having an upper portion attached to the protruding part and a lower portion attached to the floor panel around the hole for spot welding.

According to this structure, the hole is formed in the floor panel to enable spot welding, so that support member having a generally hat-shaped cross section placed between the protruding part of the inner sill part and the floor panel can be attached to the floor panel by utilizing the hole. Therefore, it is possible to support the protruding part by the floor panel without the need to form any upward protrusion on the floor panel. The floor panel thus structured can assure the versatility in the sliding-door and swing-door vehicles.

In another aspect of the present invention, the aforementioned support member is made of an outer portion of the cross member.

According to this structure, the protruding part of the inner sill part is supported on the floor panel utilizing outer portion of the cross member laterally extending between the protruding part and the center rib. It is therefore possible to decrease inward deformation of the protruding part by effective use of the cross member which is a structural member for increasing the lateral stiffness of the side sill. Accordingly, it is possible to increase the strength of the protruding part in a vertical direction while achieving an effect of preventing the side sill from bending inwardly.

In another aspect of the present invention, the aforementioned cross member has the outer portion which is attached to a bottom surface of the protruding part of the inner sill part and an inner portion which projects higher than the outer portion in an area closer to the longitudinal centerline of the vehicle than the protruding part, wherein the inner portion of the cross member faces to a side wall of the protruding part.

According to this structure, it is possible to restrict vertical motion of the protruding part of the inner sill part by the outer portion of the cross member while preventing the protruding part from intruding into the vehicle interior by the inner portion of the cross member.

It is appreciated from the above that the single cross member can improve overall stiffness of the side sill while preventing bending of the side sill in the event of a lateral collision and vertical displacement of the protruding part in a reliable fashion.

In further specific aspect of the present invention, a sloping edge is formed at an upper portion of the cross member which slops from the inner portion to outer portion of the cross member, and a contact member which is disposed on the sloping edge and goes into contact with the protruding part of the inner sill part in the event of a lateral collision of the vehicle.

According to this structure, the side impact load which would applied on the side sill is more reliably transmitted to the cross member due to the provision of the cross member. Therefore, even when the cross member is shaped such that the side impact load would not easily be transmitted to the upper portion of the cross member because of the different height between the outer and inner portions of the cross member, the aforementioned underbody structure can reliably transmit the side impact load to the cross member and can prevent the side sill from bending inwardly.

In another aspect of the present invention, the height of the cross member is determined such that the cross member faces to a side wall of the rail accommodating part formed in the protruding part of the inner sill part.

According to this structure, the cross member faces to the side wall of the rail accommodating part, so that the cross member can receive the side impact load which would applied on the rail accommodating part from the sliding side door in a reliable fashion. Consequently, the cross member can also receive the side impact load acting on the sliding side door, thereby enhancing an increased effect of preventing the side sill from bending inwardly.

In another aspect of the present invention, the cross member is a member which has a generally hat-shaped cross section and has the height determined such that the upper portion of the cross member faces to a side wall of the protruding part of the inner sill part.

According to this structure, the cross member having a generally hat-shaped cross section is attached to the floor panel in a reliable fashion and the upper portion of the cross member faces to the side wall of the protruding part of the inner sill part. Therefore, a portion of the cross member where the cross member attains the highest anti-buckling performance can receive the side impact load from the protruding part where the side impact load would most severely act on the side sill. This makes it possible to effectively use the cross member as a member for increasing the lateral stiffness of the side sill. The underbody structure thus configured can perform an effectively increased effect of preventing the side sill from bending inwardly.

In still another aspect of the present invention, the cross member has a generally hat-shaped cross section, and the height of the top of the floor panel is determined such that the cross member faces to a side wall of the rail accommodating part.

According to this structure, the cross member having a generally hat-shaped cross section is attached to the floor panel in a reliable fashion and upper portion of the cross member faces to the side wall of the rail accommodating part. Therefore, a portion of the cross member where the cross member attains the highest anti-buckling performance can receive a load from the rail accommodating part where a side impact load is most severely applied to the sliding side door. This makes it possible to effectively use the cross member as a member for increasing the lateral stiffness of the side sill. The underbody structure thus configured can perform an effectively increased effect of preventing the side sill from bending inwardly.

In yet another aspect of the present invention, the cross member has a generally hat-shaped cross section, and a support member is provided inside a portion of the cross member close to a joint between the cross member and the protruding part of the inner sill part.

According to this structure, the provision of the support member in the proximity of the joint between the cross member and the protruding part serves to increase the stiffness of the cross member at its portion close to the joint between the cross member and the protruding part. This structure serves also to increase the anti-buckling performance of the cross member against a side impact load performed through the protruding part and provide an increased effect of preventing the side sill from bending inwardly.

These and other objects, features and advantages of the present invention will become more apparent upon reading the following detailed description along with the accompanying drawings, in which:
FIG. 1 is a perspective view of a vehicle having an underbody structure according to a first embodiment of the present invention;
FIG. 2 is a plan view showing a middle portion of the underbody structure of the vehicle of FIG. 1;
FIG. 3 is a perspective view of a side sill and associated components thereof as seen obliquely rearward from the exterior of the vehicle of FIG. 1;
FIG. 4 is a perspective view of the side sill and associated components thereof as seen obliquely frontward from the interior of the vehicle of FIG. 1;
FIG. 5 is a cross-sectional view taken along lines A-A of FIG. 2;
FIG. 6 is an enlarged cross-sectional view particularly showing details of the internal structure of the side sill of the first embodiment;
FIG. 7 is a perspective view of a side sill and associated components thereof as seen obliquely frontward from the interior of a vehicle having an underbody structure according to a second embodiment of the present invention;
FIG. 8 is an enlarged cross-sectional view particularly showing details of the internal structure of the side sill of the second embodiment;
FIG. 9 is an enlarged cross-sectional view particularly showing details of the internal structure of a side sill according to a third embodiment of the present invention;
FIG. 10 is an enlarged perspective view of a bracket fitted as a support member in an interconnect cross member of the third embodiment;
FIG. 11 is a plan view showing a middle portion of an underbody structure of a vehicle according to a fourth embodiment of the present invention;
FIG. 12 is a perspective view of a side sill and associated components thereof as seen obliquely rearward from the exterior of the vehicle of FIG. 11;
FIG. 13 is a perspective view of the side sill and associated components thereof as seen obliquely frontward from the interior of the vehicle of FIG. 11;
FIG. 14 is a cross-sectional view taken along lines A-A of FIG. 11;
FIG. 15 is a cross-sectional view taken along lines B-B of FIG. 11;
FIG. 16 is an enlarged cross-sectional view particularly showing details of the internal structure of the side sill of the fourth embodiment;
FIG. 17 is a perspective view of a tray-like reinforcement member employed in the underbody structure of the fourth embodiment;
FIG. 18 is a cross-sectional view corresponding to FIG. 14 showing a principal part of an underbody structure of a vehicle according to a fifth embodiment of the present invention;
FIG. 19 is a cross-sectional view corresponding to FIG. 15 according to the fifth embodiment;
FIG. 20 is an exploded perspective view of an underbody structure of a vehicle according to a sixth embodiment of the present invention;
FIG. 21 is a perspective view of a side sill and associated components thereof as seen obliquely frontward from the interior of the vehicle of FIG. 20;
FIG. 22 is a cross-sectional view of the underbody structure of the sixth embodiment;
FIG. 23 is an enlarged cross-sectional view particularly showing details of the internal structure of the side sill of the sixth embodiment;
FIG. 24 is an exploded perspective view of an underbody structure of a vehicle according to a seventh embodiment of the present invention;
FIG. 25 is an enlarged cross-sectional view particularly showing details of the internal structure of a side sill of the underbody structures the seventh embodiment;
FIG. 26 is a perspective view of a side sill and associated components thereof as seen obliquely frontward from the interior of a vehicle having an underbody structure according to an eighth embodiment of the present invention;
FIG. 27 is an enlarged cross-sectional view particularly showing details of the internal structure of the side sill of the eighth embodiment;
FIG. 28 is a perspective view of a side sill and associated components thereof as seen obliquely frontward from the interior of a vehicle having an underbody structure according to a ninth embodiment of the present invention; and
FIG. 29 is an enlarged cross-sectional view particularly showing details of the internal structure of the side sill of the ninth embodiment.

Specific embodiments of the present invention are now described, by way of example, with reference to the accompanying drawings, in which identical or similar elements are indicated by the same reference numerals.

### FIRST EMBODIMENT

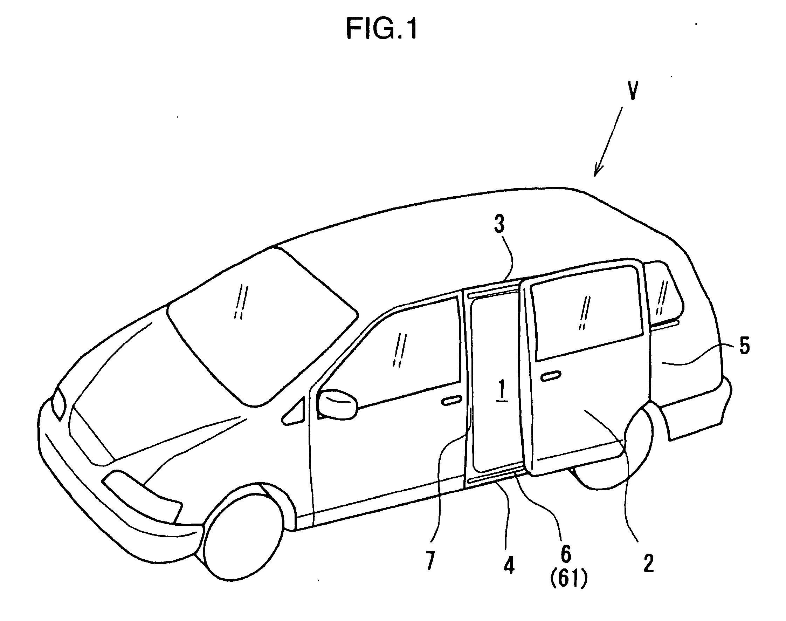

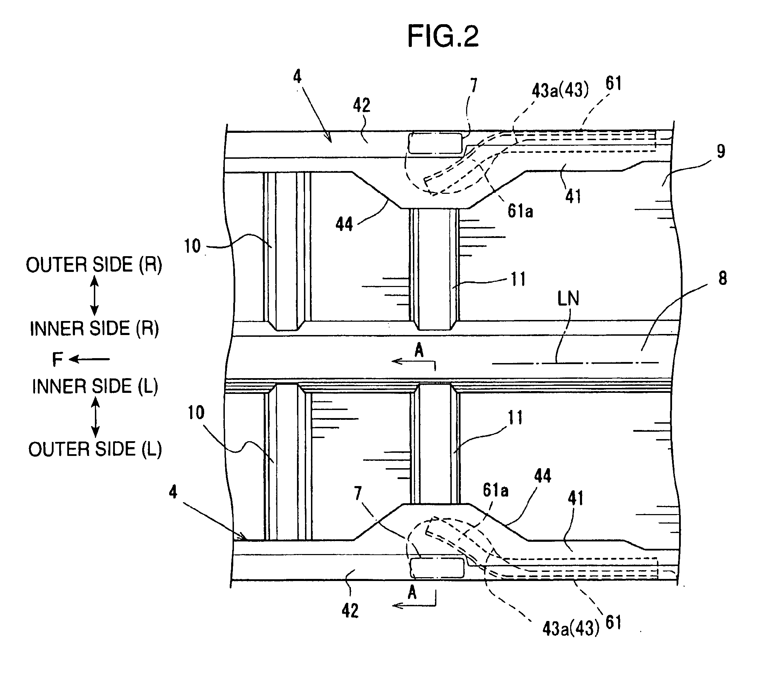

FIG. 1 is a perspective view of a vehicle V with an underbody structure according to a first embodiment of the present invention, in which the vehicle V is provided with a pair of sliding doors 2 for opening and closing left and right door openings 1 for a rear seat. The vehicle V includes in its bodywork left and right roof side rails 3, left and right side sills 4, left and right rear fenders 5, and three pairs of left and right sliding door rails 6 for guiding rollers (not shown) of the sliding doors 2. The roof side rail 3 and the side sill 4 on each side of the vehicle V are attached by a vertically extending B-pillar or center pillar 7 which partitions the door opening 1 for the rear seat from a door opening for a front seat. As shown in FIG. 2, the underbody structure includes the aforementioned left and right side sills 4 extending parallel to a longitudinal axis, or centerline LN, of the vehicle V, a floor panel 9 on which a center rib projecting upwardly 8 is formed on the center of the floor panel 9 along with the longitudinal centerline LN of the vehicle V, a pair of left and right front cross members 10 joining the left and right side sills 4 to the center rib 8, and a pair of left and right interconnect cross members 11 also joining the left and right side sills 4 to the center rib 8, respectively. The front and interconnect cross members 10 and 11 are provided on a top surface of the floor panel 9 with a specific distance therebetween in the longitudinal centerline LN of the vehicle V. The front cross members 10 are located in a forward part of a passenger compartment just below the front seats while the interconnect cross members 11 are located in a rear part of the passenger compartment at about the B-pillars 7.

While the vehicle V of the embodiment is provided with the sliding doors 2 on both the left and right sides, the following discussion deals with only the left-hand sliding door 2 and associated components unless otherwise mentioned specifically.

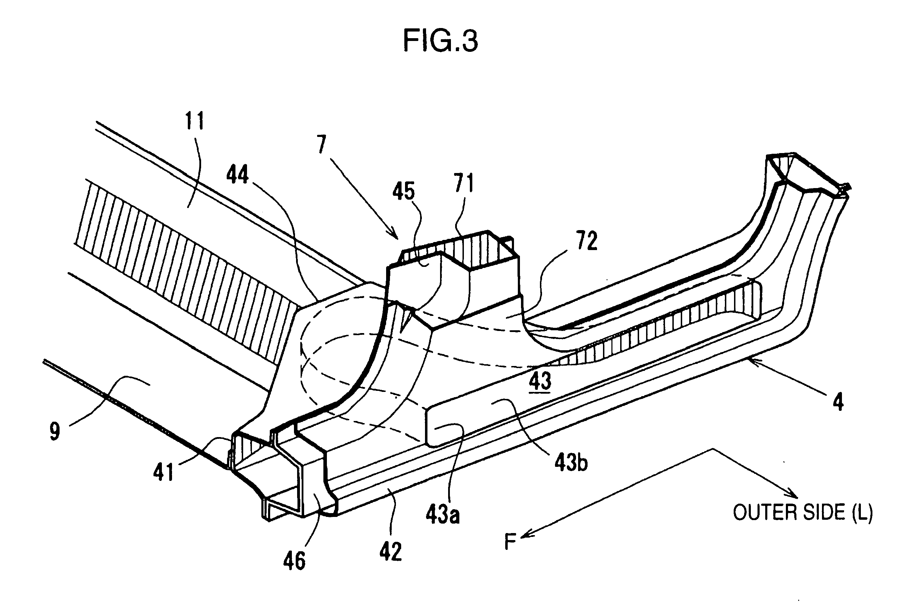

Referring to FIG.3, each of the B-pillars 7 is a generally box-section structural member made of an inner pillar 71 provided on an inside of the vehicle V and an outer pillar 72 provided on an outside of the vehicle V, the outer pillar 72 being formed integrally with an outer sill part 42 of the side sill 4. The inner pillar 71 and the outer pillar 72 have flanges formed along front and rear edges. The inner pillar 71 and the outer pillar 72 are assembled into a single structure by joining the front and rear flanges thereof.

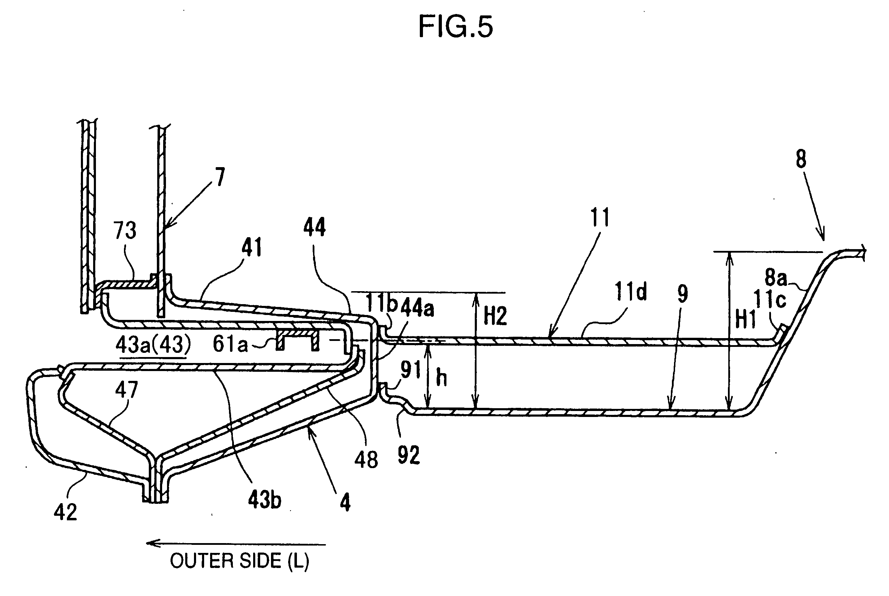

Designated by the reference numeral 45 in FIG. 3 is a pillar reinforcement vertically extending inside the B-pillar 7, and 46 is a side sill reinforcement longitudinally extending inside the side sill 4. There is provided a laterally extending reinforcement plate 73 (see FIG. 5) which connects the inner pillar 71 to the outer pillar 72 via the pillar reinforcement 45 to reinforce the interior of the B-pillar 7.

The side sill 4 is a generally box-section structural member made of an inner sill part 41 provided on the inside of the vehicle V and the aforementioned outer sill part 42 provided on the outside of the vehicle V, the inner and outer sill parts 41 and 42 being assembled into a single structure by joining flanges formed along upper and lower edges. As can be seen from FIG. 2, the inner sill part 41 has a protruding part 44 bulging to the interior of the vehicle V in close proximity to a lower end of the B-pillar 7.

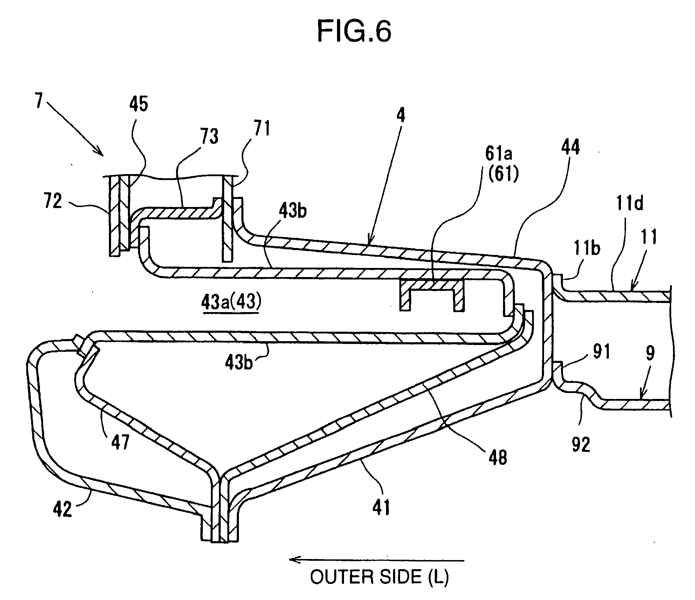

Referring now to FIGS. 3 to 6, there is formed a slide rail accommodating part 43 extending rearward along the vehicle body from the proximity of the lower end of the B-pillar 7 at a location opposite the protruding part 44. The slide rail accommodating part 43 is a longitudinally elongate narrow opening 43a formed in the outer sill part 42. There is provided a rail bracket 43b in the opening 43a. The rail bracket 43b is shaped to form an inward recessed channel opening to the exterior of the vehicle V.

An upper outer end of the rail bracket 43b is attached to a joint part of the reinforcement plate 73 at a lower end thereof.

A lower outer end of the rail bracket 43b is attached to an internal reinforcement member 47 of the side sill 4.

The reinforcement member 47 extends parallel to the longitudinal axis of the vehicle V and reinforces the side sill 4 together with the outer sill part 42. An upper end of the reinforcement member 47 is attached to the upper outer end of the rail bracket 43b and to an upper end of the outer sill part 42 while a lower end of the reinforcement member 47 is attached to the lower flanges of the inner and outer sill parts 41 and 42 with the reinforcement member 47 sandwiched therebetween.

There is provided a gusset 48 below the underside of an inner portion of the rail bracket 43b. An upper end of the gusset 48 is attached to an inner side wall of the rail bracket 43b and to an upper end of the outer sill part 42 while a lower end of the gusset 48 is attached to the reinforcement member 47 between the inner and outer sill parts 41 and 42.

A lower sliding door rail 61 for holding a lower part of the sliding door 2 is attached on a ceiling of an upper portion of the rail bracket 43b. The lower sliding door rail 61 has at a forward end thereof an bent portion 61a for guiding inwardly the lower part of the sliding door 2 to the protruding part 44 of the side sill 4. Specifically, the forward end of the lower sliding door rail 61 is curved inwardly as shown in FIG. 2 so that the sliding door 2 which has been slid up to a forwardmost position can be pulled inward of the vehicle V to close the door opening 1. An outer flange 91 of the floor panel 9 is attached to a lower part of the side sill 4, more specifically to a lower end of a vertical wall portion of the inner sill part 41, on each side (left and right) of the vehicle V to form a floor of the passenger compartment. As the floor panel 9 is attached to the lower part of the side sill 4 in this way, it is possible to be lower the floor of the passenger compartment and thereby provide as wide a passenger space as possible.

The floor panel 9 is of a configuration which has a partially recessed portion facing to the protruding part 44 so as to fit on an inward bulging shape of the protruding part 44.

To make the floor of the passenger compartment as low as possible, an outer periphery of the floor panel 9 is shaped to form a step-like portion 92 which is further lowered from the outer flange 91.

As previously mentioned, there is formed the longitudinally extending center rib 8 along with the longitudinal centerline LN of the vehicle V. The center rib 8 is formed to accommodate such vehicle components as an exhaust pipe and a propeller shaft (not shown). The provision of the center rib 8 serves to increase surface stiffness of the floor panel 9 as well as overall stiffness, and in particular torsional stiffness, of the vehicle body.

The interconnect cross member 11 extends widthwise between the protruding part 44 of the side sill 4 and the center rib 8 to interconnect these elements 44 and 8. More specifically, the interconnect cross member 11 bridges an inside wall 44a of the protruding part 44 of the side sill 4 to a side surface 8a of the center rib 8 above the floor panel 9. Height H1 of the center rib 8 above floor level is made larger than height H2 of the side sill 4 so that the center rib 8 itself has greater stiffness than the side sill 4.

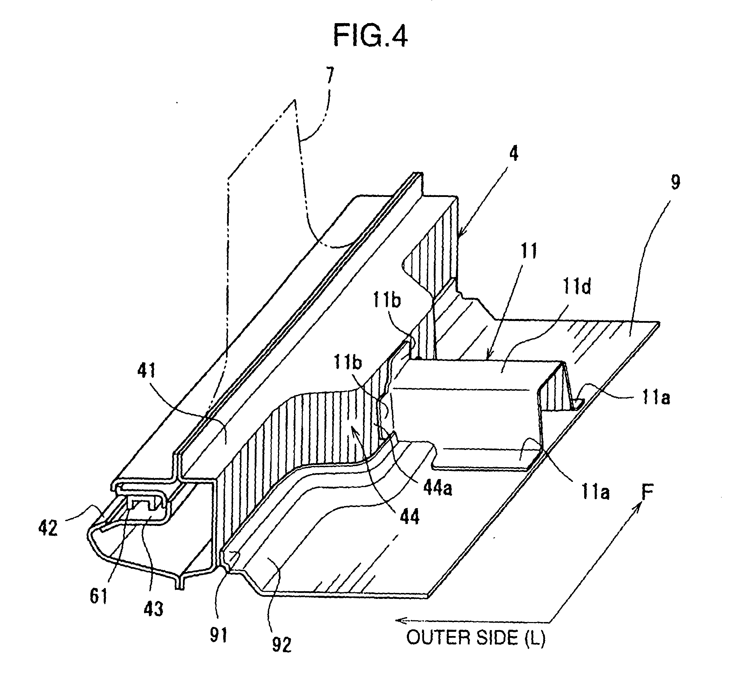

As shown in FIG. 4, the interconnect cross member 11 is a structural member having a generally hat-shaped cross section. The interconnect cross member 11 has lower front and rear flanges 11a which are attached to the top surface of the floor panel 9. The interconnect cross member 11 has outer end flanges 11b which extend upward, frontward, and rearward. These flanges 11b are attached to the inside wall 44a of the protruding part 44 of the side sill 4. Additionally, as shown in FIG. 5, the interconnect cross member 11 has an inner end flange 11c which is attached to the side surface 8a of the center rib 8. The interconnect cross member 11 is firmly affixed between the protruding part 44 of the side sill 4 and the center rib 8 in this fashion. An upper flat portion 11d of the interconnect cross member 11 has a height h substantially equal the height of the rail bracket 43b above the floor level as shown in FIG. 5, so that the inward recessed channel formed by the rail bracket 43b overlaps the upper flat portion 11d of the interconnect cross member 11 in side view.

Discussed in the following paragraphs is how an impact load occurring in the event of a lateral collision is transferred in the above-described underbody structure of the first embodiment.

Generally, it is necessary to form the slide rail accommodating part 43 in the side sill 4 in the vehicle V provided with the sliding door 2 as shown in the foregoing explanations of the first embodiment. The provision of the slide rail accommodating part 43 in the side sill 4 typically results in a reduction in areas of closed cross section of the side sill 4, eventually causing a significant reduction in lateral stiffness of the side sill 4. Consequently, a side impact load acting on the vehicle V in the event of a lateral collision tends to cause the side sill 4 bend or collapse inward.

According to the present embodiment, however, the laterally extending interconnect cross member 11 connects the protruding part 44 of the side sill 4 to the center rib 8, so that the interconnect cross member 11 laterally supports the side sill 4 and the side impact load which would applied on the side sill 4 would be transmitted to the interconnect cross member 11 through the protruding part 44 and born by the center rib 8. This structure serves to increase the lateral stiffness of the side sill 4 and prevent a bending thereof. Especially, because the side sill 4 is attached to the interconnect cross member 11 at the protruding part 44 where the side impact load would most severely act on the side sill 4, the underbody structure of the embodiment can effectively resist the side impact load.

Since the underbody structure of the present embodiment sturdily bears the side impact load by means of the highly rigid center rib 8, it is possible to decrease deformation of the side sill 4 as much as possible in the event of a lateral collision by minimizing a reduction in the lateral stiffness of the side sill 4 regardless of the provision of the slide rail accommodating part 43 in the side sill 4. Additionally, since the height of the interconnect cross member 11, more specifically the height h of the upper flat portion 11d of the interconnect cross member 11 above the floor level, is determined such that the interconnect cross member 11 faces to the inner side wall of the rail bracket 43b, a side impact load acting on the sliding door 2 itself would be transmitted directly to a portion of the interconnect cross member 11 where the interconnect cross member 11 fulfils maximum anti-buckling performance, the side impact load acting on the sliding door 2 can also be born by the center rib 8.

Since the side impact loads acting on the sliding door 2 and the side sill 4 in the event of a lateral collision would be transmitted to the center rib 8 through the interconnect cross member 11 as described above, the underbody structure of the first embodiment can prevent the side sill 4 from bending in a reliable fashion and withstand the side impact loads. In the underbody structure of the first embodiment, the laterally extending interconnect cross member 11 connects the protruding part 44 formed on the inner sill part 41 of the side sill 4 to the center rib 8 formed on the floor panel 9, so that the lateral stiffness of the side sill 4 can be increased with the aid of the center rib 8. This structure makes it possible to effectively use the existing center rib 8 which extends along with the longitudinal centerline LN of the vehicle V between the left and right edges of the floor panel 9 for increasing the lateral stiffness of the side sill 4 which is mostly located above the floor panel 9. Especially because the interconnect cross member 11 is attached to the protruding part 44 of the side sill 4, it is possible to sturdily support the side sill 4 at the protruding part 44 where the side impact load would most severely act on the side sill 4. Therefore, the above-described underbody structure of the first embodiment applied to the vehicle V provided with the sliding side doors 2 makes it possible to further increase the lateral stiffness of the side sill 4 and sturdily resist the side impact load acting on the vehicle V, yet providing a passenger compartment with wide space by locating the side sill 4 at a position higher than the floor panel 9. Additionally, the height H1 of the center rib 8 above the floor level is higher than the height H2 of the side sill 4 in the foregoing first embodiment, so that the center rib 8 can maintain its stiffness to sturdily resist the side impact load. This serves to further enhance the lateral stiffness of the side sill 4 and prevent the side sill 4 from bending in a reliable fashion.

In the above-described first embodiment, the interconnect cross member 11 having the generally hat-shaped cross section has the lower front and rear flanges 11a which are attached to the top surface of the floor panel 9 and the height h of the upper flat portion 11d of the interconnect cross member 11 above the floor level is determined such that the upper flat portion 11d of the interconnect cross member 11 faces to the inside wall 44a of the protruding part 44. Consequently, the portion of the interconnect cross member 11 where the interconnect cross member 11 fulfils the highest anti-buckling performance receives the side impact load from the protruding part 44 where the side impact load would most severely act on the side sill 4. This makes it possible to effectively use the interconnect cross member 11 having the generally hat-shaped cross section as a member for increasing the lateral stiffness of the side sill 4.

Furthermore, since the interconnect cross member 11 is disposed such that the interconnect cross member 11 faces to the inner side wall of the rail bracket 43b in the foregoing first embodiment, the side impact load acting on the rail bracket 43b from the sliding door 2 is reliably transmitted to the interconnect cross member 11. For this reason, the interconnect cross member 11 can also be used as a member for receiving the side impact load which would applied on the sliding door 2. The aforementioned working of the underbody structure of the first embodiment can be summarized by saying that the interconnect cross member 11 and the center rib 8 together constitute a mechanism for effectively resisting the side impact loads acting on not only the side sill 4 but also the sliding door 2 so that the underbody structure of the embodiment can perform an increased effect of preventing the side sill 4 from bending inwardly.

Also, since the interconnect cross member 11 having the generally hat-shaped cross section has the lower front and rear flanges 11a which are attached to the top surface of the floor panel 9 and the height h of the upper flat portion 11d of the interconnect cross member 11 above the floor level is determined such that the interconnect cross member 11 faces to the inner side wall of the rail bracket 43b in the above-described first embodiment, the upper flat portion 11d of the interconnect cross member 11 which fulfils the highest anti-buckling performance would receive the side impact load from the rail bracket 43b of the side sill 4 where the side impact load acting on the sliding door 2 would be applied. This also makes it possible to effectively use the interconnect cross member 11 having the generally hat-shaped cross section as a member for increasing the lateral stiffness of the side sill 4, so that the underbody structure of this embodiment can attain an efficiently increased effect of preventing the side sill 4 from bending inwardly.

While the outer sill part 42 and the rail bracket 43b are configured as separate components in the foregoing first embodiment, this invention is not limited to this structure. As an alternative, the outer sill part 42 and the rail bracket 43b may be configured by a single component by shaping the outer sill part 42 to integrally form an inward recessed channel opening to the exterior of the vehicle V. Furthermore, the above-described underbody structure of the first embodiment may be modified such that the interconnect cross member 11 is located at a position lower than the rail bracket 43b.

Moreover, the interconnect cross member 11 need not necessarily be a generally hat-shaped member but may be any rod member having an L-shaped cross section, a closed square cross section or a round cross section, for instance, as long as the interconnect cross member 11 extends along a lateral direction of the vehicle V and interconnects the protruding part 44 of the side sill 4 and the center rib 8.

### SECOND EMBODIMENT

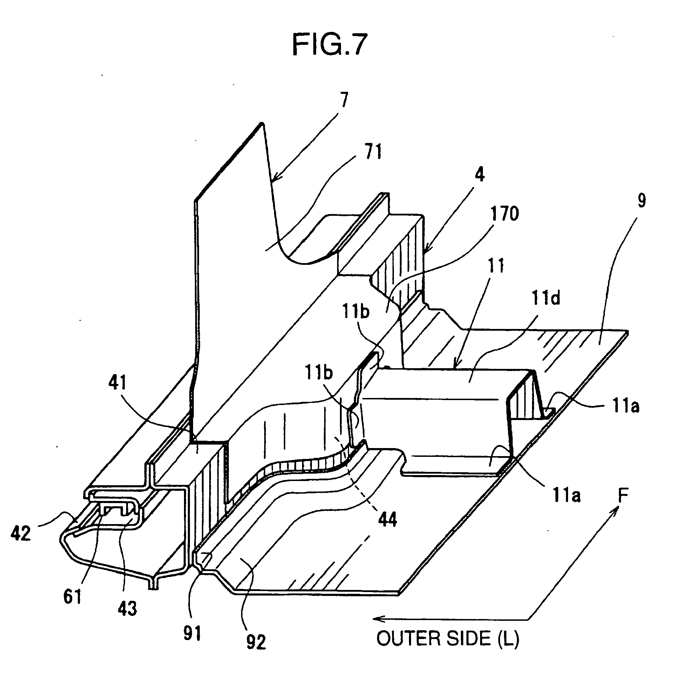

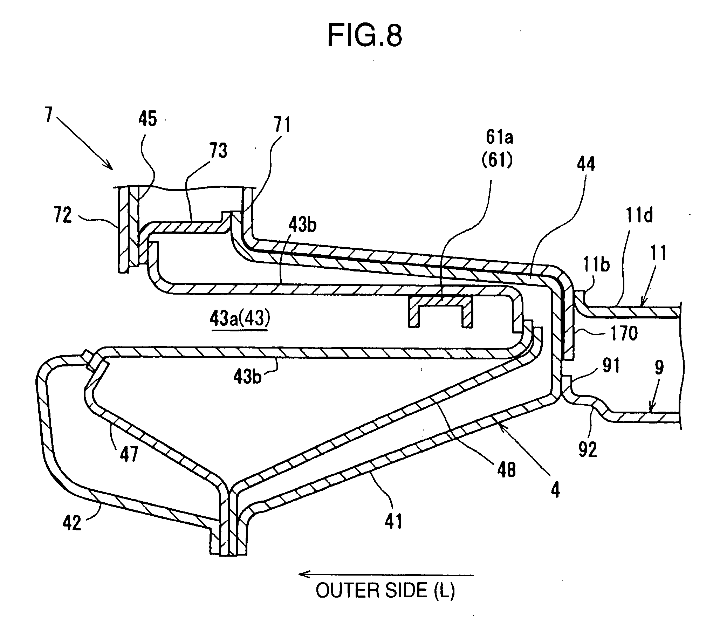

An underbody structure of a vehicle V according to a second embodiment of the present invention is now described with reference to FIGS. 7 and 8.

The underbody structure of this embodiment is characterized in that a lower end portion of the inner pillar 71 of the B-pillar or center pillar 7 has an extended part 170 which extends laterally toward the longitudinal centerline LN of the vehicle V so as to cover the protruding part 44 of the inner sill part 41. The B-pillar 7 provided with the extended part 170 covering the protruding part 44 is attached to the protruding part 44 through the extended part 170. This structure of the second embodiment serves to increase stiffness of the protruding part 44 of the inner sill part 41.

Since the outer end flanges 11b of the interconnect cross member 11 are attached to the extended part 170 at the lower end portion of the inner pillar 71 as illustrated, part of the side impact load transmitted from the side sill 4 would be conveyed to the B-pillar 7. Accordingly, stiffness of the B-pillar 7 helps increase the lateral stiffness of the side sill 4 in the underbody structure of this embodiment.

As can be understood from the above description that it is possible to decrease inward deformation of the protruding part 44 and increase the lateral stiffness of the side sill 4 by utilizing the stiffness of the B-pillar 7 according to the second embodiment. Since the B-pillar 7 is also joining to the interconnect cross member 11 through the extended part 170 provided at the lower end portion, the underbody structure of the embodiment prevents the lower end portion of the B-pillar 7 from deforming into the vehicle interior and prevents the B-pillar 7 from deforming due to a side impact load.

As is apparent from FIG. 8, the extended part 170 downwardly extends beyond the rail bracket 43b. Therefore, the extended part 170 enable to receive not only the side impact load applied to the side sill 4 but also the side impact load applied to the sliding door 2 so that the underbody structure of the embodiment serves to further increase the stiffness of the side sill 4.

While the extended part 170 is overlaid on the protruding part 44 of the inner sill part 41 to cover the protruding part 44 in the second embodiment, the protruding part 44 of the inner sill part 41 need not necessarily be overlaid by the extended part 170. For example, it is possible to remove a portion of the inner sill part 41 covered by the extended part 170 and structure an upper portion of the protruding part 44 by the extended part 170.

### THIRD EMBODIMENT

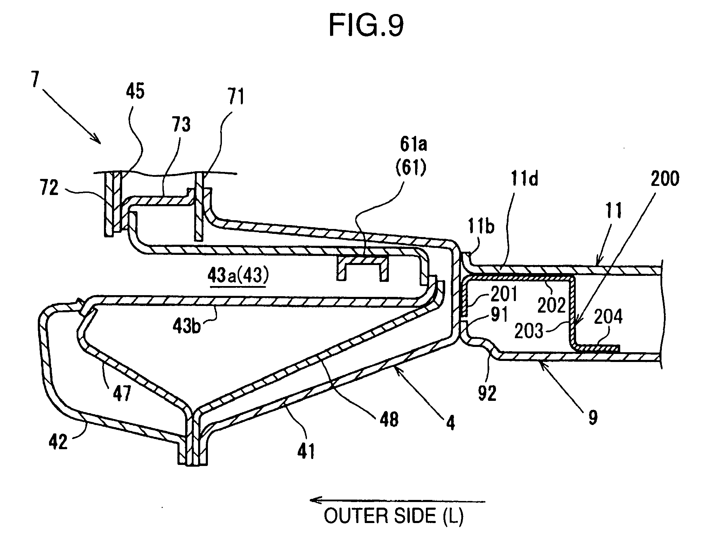

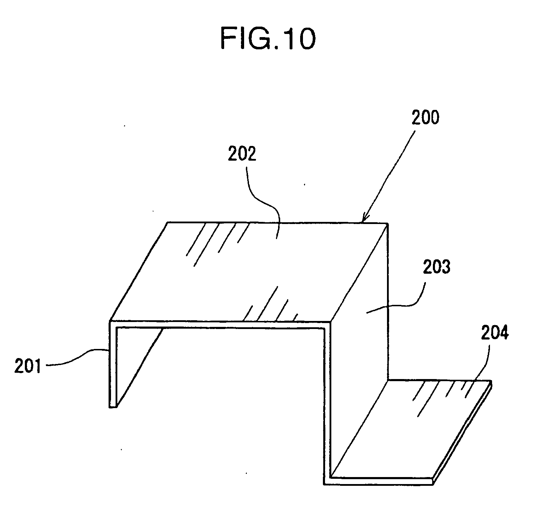

Next, an underbody structure of a vehicle V according to a third embodiment of the present invention is described with reference to FIGS. 9 and 10.

The underbody structure of this embodiment is characterized in that there is provided a bracket 200 serving as a support member inside a portion of the interconnect cross member 11 close to a joint between the interconnect cross member 11 and the protruding part 44 of the inner sill part 41 for increasing stiffness of that portion of the interconnect cross member 11. Due to the provision of the bracket 200, the interconnect cross member 11 has greater stiffness at its portion close to the joint than the single-element interconnect cross member 11 of the foregoing embodiments. This structure of the third embodiment serves to increase the anti-buckling performance of the interconnect cross member 11 against a side impact load applied to the side sill 4.

The bracket 200 is formed by bending a piece of sheet metal into a hooklike shape as shown in FIG. 10. Specifically, the bracket 200 includes an outer end wall 201 attached to the inside wall 44a of the protruding part 44, a upper flat portion 202 extending from an upper end of the outer end wall 201 at right angles thereto in a direction opposite the protruding part 44 and attached to a bottom surface of the interconnect cross member 11, a supporting wall 203 extending downward from an inner end of the upper flat portion 202 between the upper flat portion 11d of the interconnect cross member 11 and the floor panel 9, and a abutment flange 204 on the floor panel 9 extending from a lower end of the supporting wall 203 at right angles thereto in a direction opposite the protruding part 44 and attached to the top surface of the floor panel 9.

The bracket 200 is assembled as follows. First, the upper flat portion 202 of the bracket 200 is attached to the ceiling surface of the interconnect cross member 11 by utilizing a surface bonding technique to make a subassembly of the bracket 200 and the interconnect cross member 11. Next, the abutment flange 204 on the floor panel 9 of the bracket 200 attached to the interconnect cross member 11 is placed on the top surface of the floor panel 9. Then, the outer end wall 201 and the abutment flange 204 on the floor panel 9 are welded to the inner sill part 41 and the floor panel 9, respectively, through welding holes (not shown), for instance.

The bracket 200 is firmly attached to the interconnect cross member 11 inside its portion close to the joint between the interconnect cross member 11 and the protruding part 44 of the inner sill part 41 as shown in FIG. 9 in the aforementioned manner, whereby the anti-buckling performance of the interconnect cross member 11 against the side impact load is increased. Since the bracket 200 for reinforcement is fitted to the interconnect cross member 11 inside the portion thereof close to the joint between the interconnect cross member 11 and the protruding part 44 as described above, the anti-buckling performance of the interconnect cross member 11 is increased at that portion according to the third embodiment. Therefore, the interconnect cross member 11 can sturdily receive the side impact load transmitted through the protruding part 44 of the side sill 4 and the underbody structure of the third embodiment can perform an increased effect of preventing the side sill 4 from bending inwardly.

Especially because the bracket 200 is attached not only to the interconnect cross member 11 but also to the floor panel 9 and the inner sill part 41, the bracket 200 can increase the stiffness of the interconnect cross member 11 at its portion close to the joint between the interconnect cross member 11 and the protruding part 44.

It is to be noted that the bracket 200 is not limited to the aforementioned hooklike shape shown in FIG. 10. For example, the bracket 200 may be an element having a boxlike shape or else as long as the bracket 200 increases the stiffness of the interconnect cross member 11.

### FOURTH EMBODIMENT

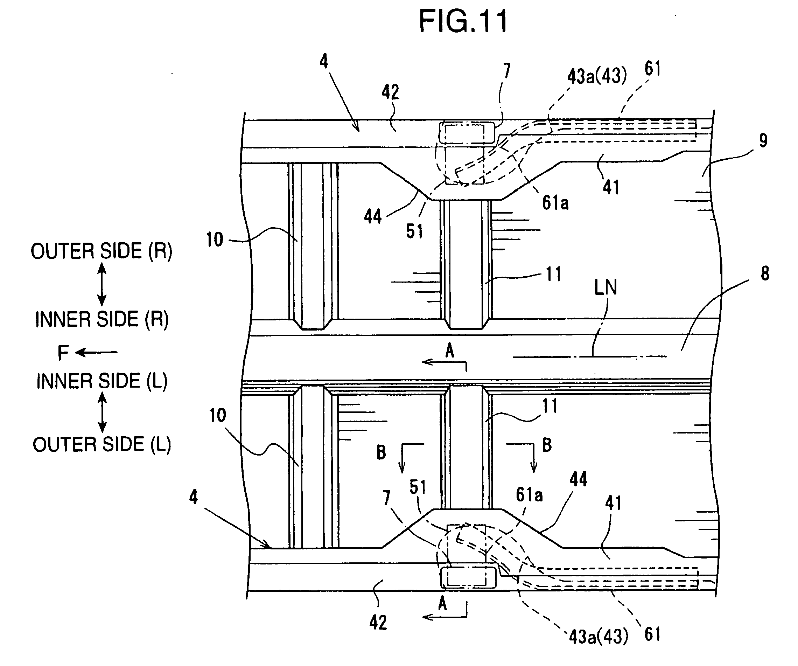

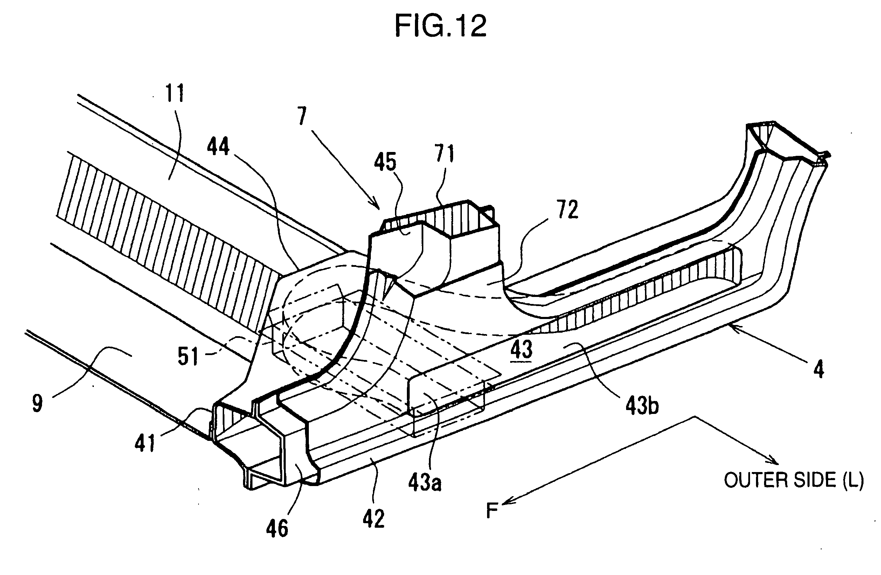

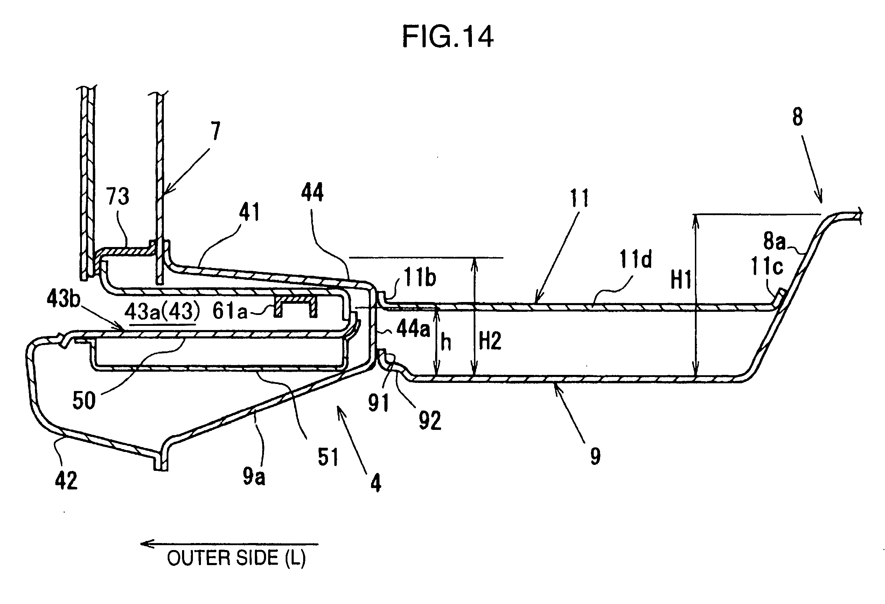

An underbody structure of a vehicle V according to a fourth embodiment of the present invention is now described with reference to FIGS. 11 to 17.

The underbody structure of this embodiment is characterized in that the side sill 4 is provided with a laterally extending tray-like reinforcement member 51 which is attached to a bottom 50 of the rail bracket 43b.

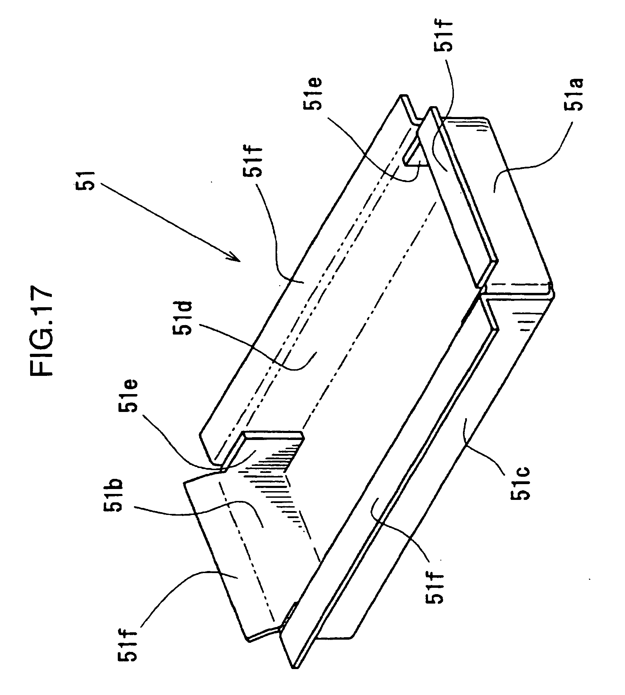

The tray-like reinforcement member 51 is formed by bending a piece of sheet metal into a tray-like shape as shown in FIG. 17. Specifically, the tray-like reinforcement member 51 has four vertically erected side walls designated 51a, 51b, 51c and 51d. The outer side wall 51a and the inner side wall 51b each have a pair of front and rear flanges 51e which are bent inward and attached to inside surfaces of the adjacent side walls 51c and 51d. All of the side walls 51a, 51b, 51c, and 51d have at upper ends thereof outwardly directed flanges 51f.

Since four sides of the tray-like reinforcement member 51 are surrounded by the side walls 51a, 51b, 51c, and 51d as described above, the tray-like reinforcement member 51 has high stiffness not only in the lateral direction but also in a longitudinal centerline LN of the vehicle V, thereby performing greater overall stiffness than the generally hat-shaped cross section of the interconnect cross member 11. Therefore, when subjected to a side impact, the tray-like reinforcement member 51 sturdily resists not only an impact load input right from the side of the vehicle V but also an impact load input diagonally from the front or rear without deforming.

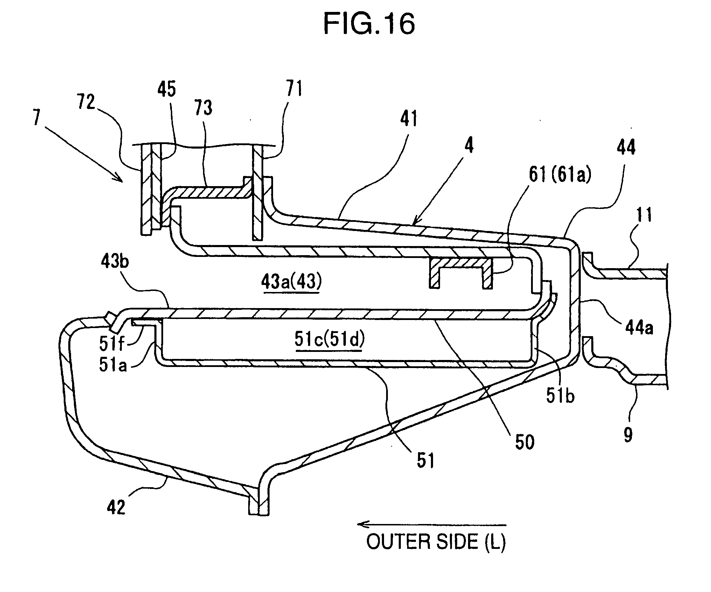

The tray-like reinforcement member 51 having such high stiffness is attached to the bottom 50 of the rail bracket 43b, and more particularly, to lower portions of the rail bracket 43b from an outer end to inner end thereof (see FIG. 16).

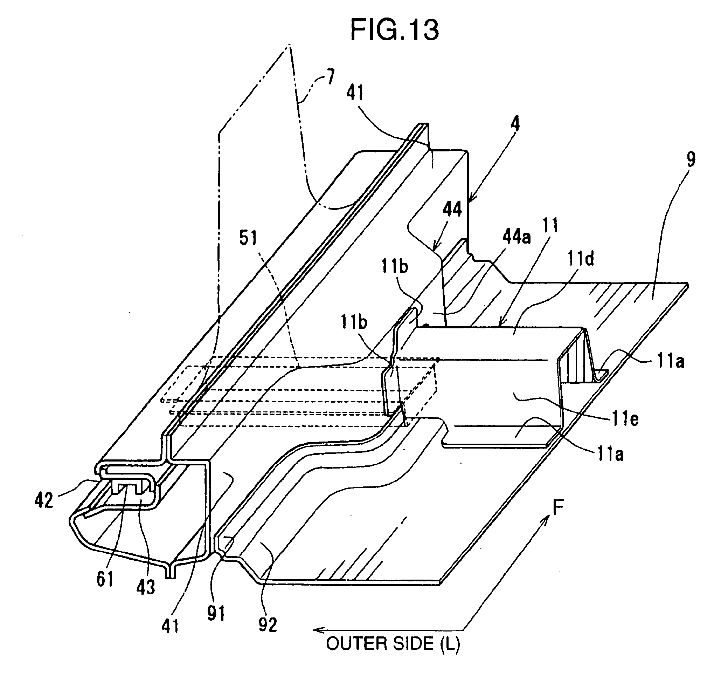

As shown in FIG. 13, floor panel 9 in the fourth embodiment is of a configuration which has a partially recessed portion facing to the protruding part 44 so as to fit on an inward bulging shape of the protruding part 44.

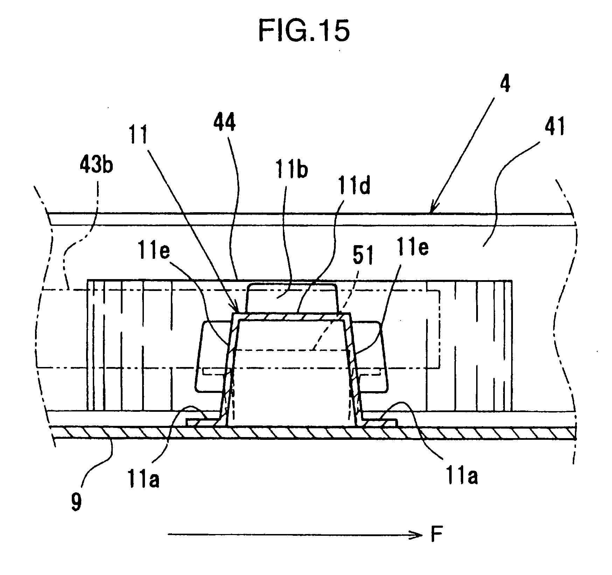

As shown in FIG. 15, side walls 11e of the interconnect cross member 11 are located at a place to face substantially the rail bracket 43b and to face substantially the side wall 51b of the tray-like reinforcement member 51. Therefore, the impact load applied to the side of the vehicle V would entirely be transmitted directly to the interconnect cross member 11.

In the above-described underbody structure of the fourth embodiment, the laterally extending tray-like reinforcement member 51 is provided inside the protruding part 44 of the side sill 4, so that a side impact load would more easily be transmitted directly to the interconnect cross member 11, thus the underbody structure can resist the side impact load in a reliable fashion. Also, since the underbody structure of the present embodiment reliably would bear the side impact load by means of the highly rigid center rib 8, it is possible to increase the stiffness of the side sill 4. Therefore, a reduction in the lateral stiffness of the side sill 4 can be minimized despite the provision of the slide rail accommodating part 43 in the side sill 4. The impact loads applied on the side sill 4 or the sliding door 2 and so on in the event of a lateral collision would be transmitted to the highly rigid center rib 8 through the tray-like reinforcement member 51, the rail bracket 43b, and the interconnect cross member 11 as described above. Accordingly, the underbody structure of the fourth embodiment can prevent the side sill 4 from bending and bear the side impact loads in a reliable fashion.

In the underbody structure of the fourth embodiment, the laterally extending tray-like reinforcement member 51 is provided below the rail bracket 43b within the protruding part 44 of the side sill 4 in such a way that the tray-like reinforcement member 51 overlaps the interconnect cross member 11 in side view as described above, so that the impact loads occurring in the event of a lateral collision would be transmitted directly to the interconnect cross member 11 via the tray-like reinforcement member 51. Also, since the interconnect cross member 11 is attached to the highly rigid center rib 8, increased stiffness is imparted to the interconnect cross member 11 to resist the impact loads. Therefore, in the event of a lateral collision, the side impact loads would be applied to the rigid interconnect cross member 11 in a reliable fashion notwithstanding deformation of the protruding part 44 or the like. Accordingly, the above-described underbody structure of the fourth embodiment applied to the vehicle V provided with the sliding side doors 2 makes it possible to increase the lateral stiffness of the side sill 4 by joining the laterally extending interconnect cross member 11 to the protruding part 44 of the side sill 4 and sturdily resist the side impact load acting on the vehicle V in a more reliable fashion.

According to the present invention, the side sill 4 need not necessarily be reinforced by the tray-like reinforcement member 51 having a boxlike shape. Alternatively, the side sill 4 may be reinforced by a member having a hat-shaped cross section or an L-shaped cross section, for example, provided that that member extends laterally within the protruding part 44 of the side sill 4 and reinforces the same.

In the above-described fourth embodiment, the interconnect cross member 11 is positioned such that the interconnect cross member 11 overlaps not only the tray-like reinforcement member 51 but also the rail bracket 43b disposed within the protruding part 44 of the side sill 4 in side view. Therefore, the interconnect cross member 11 enables to receive not only the side impact load transmitted directly through the tray-like reinforcement member 51 but also the side impact load applied to the rail bracket 43b. For this reason, it is possible to transmit a large amount of side impact loads directly to the interconnect cross member 11 by effectively using the rail bracket 43b as well. Accordingly, the underbody structure of the fourth embodiment can transmit the side impact loads applied to both the tray-like reinforcement member 51 and the rail bracket 43b and enables to perform the further increased effect of preventing the side sill 4 from bending inwardly.

Furthermore, since the tray-like reinforcement member 51 is formed into a laterally extending boxlike shape in the fourth embodiment, the tray-like reinforcement member 51 is strengthened enough to transmit a side impact load input through the side sill 4 to the interconnect cross member 11 in a reliable fashion. Since the side impact load would more reliably be transmitted to the interconnect cross member 11 in this way, the underbody structure of the fourth embodiment can further increase the lateral stiffness of the side sill 4. Accordingly, the underbody structure of the embodiment performs yet increased effect of preventing the side sill 4 from bending inwardly. Moreover, since the tray-like reinforcement member 51 is attached to the bottom 50 of the rail bracket 43b in the foregoing fourth embodiment, it is possible to increase stiffness of the rail bracket 43b. This structure imparts increased stiffness to the rail bracket 43b to support the sliding door 2. In addition, since the tray-like reinforcement member 51 is not attached to the outer sill part 42, the provision of the tray-like reinforcement member 51 does not jeopardize external appearance of the side sill 4.

### FIFTH EMBODIMENT

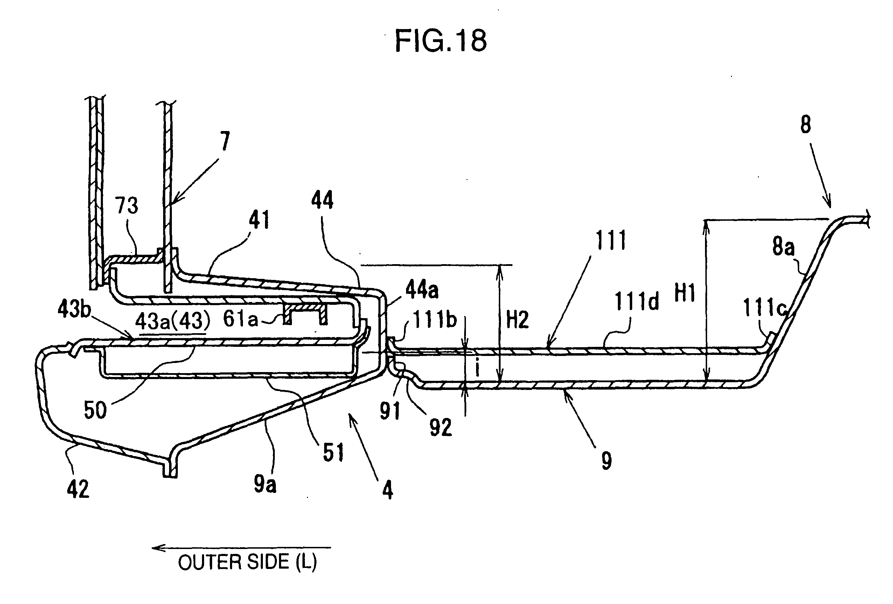

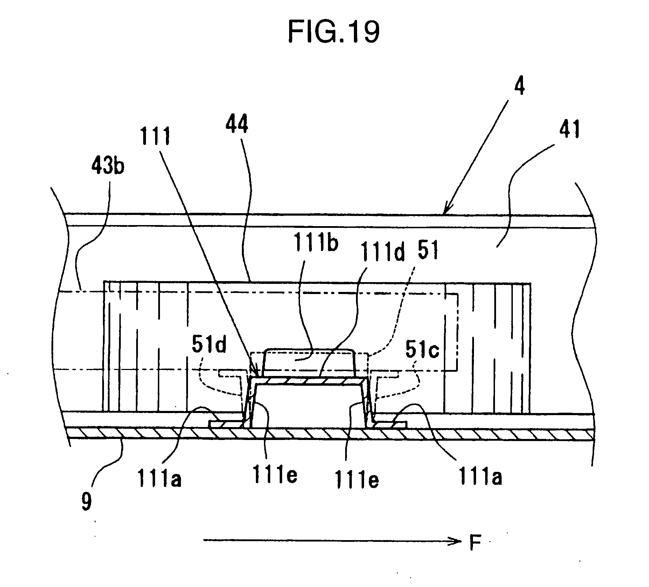

Another underbody structure of a vehicle V according to a fifth embodiment of the present invention is now described with reference to FIGS. 18 and 19. The underbody structure of this embodiment is characterized in that interconnect cross members 111 are positioned lower than the interconnect cross member 11 of the fourth embodiment so that an upper flat portion 111d of each interconnect cross member 111 has approximately the same height as the tray-like reinforcement member 51. This arrangement serves to provide a passenger compartment with wide space.

More specifically, the interconnect cross member 111 is a structural member having a generally hat-shaped cross section as shown in FIG. 19. The interconnect cross member 111 has lower front and rear flanges 111a which are attached to the top surface of the floor panel 9, an outer end flange 111b which extends upward to join to the inside wall 44a of the protruding part 44 of the side sill 4. An inner end flange 111c is also attached to the side surface 8a of the center rib 8 as shown in FIGS. 18 and 19. The interconnect cross member 111 extends laterally between the center rib 8 and the protruding part 44 and interconnects both as in the fourth embodiment.

The height i of the upper flat portion 111d of the interconnect cross member 111 is made approximately equal to the height of the tray-like reinforcement member 51 as stated above. Also, side walls 111e of the interconnect cross member 111 are located generally against the side walls 51c and 51d as depicted in FIG. 19.

Since the interconnect cross member 111 is mounted as described above in the underbody structure of the fifth embodiment, it is possible to decrease the height of the interconnect cross member 111 compared to the interconnect cross member 11 of the fourth embodiment. The interconnect cross member 111 thus arranged does not protrude so much into the passenger compartment. Accordingly, the underbody structure of the fifth embodiment makes it possible to efficiently use the vehicle interior, especially an upper portion thereof. Although the interconnect cross member 111 is mounted at a low position as described above, the interconnect cross member 111 overlaps the tray-like reinforcement member 51 in side view, so that a side impact load acting on the vehicle V in the event of a lateral collision would be transmitted to the interconnect cross member 111 through the tray-like reinforcement member 51 and born by the center rib 8 in a reliable fashion. Therefore, the underbody structure of the fifth embodiment can prevent the side sill 4 from bending as in the first embodiment.

According to the fifth embodiment, the upper flat portion 111d of the interconnect cross member 111, which enhances the highest anti-buckling performance, sturdily receives the side impact load from the tray-like reinforcement member 51 where the side impact load would directly be applied. This makes it possible to effectively use the tray-like reinforcement member 51 and the interconnect cross member 111 as members for increasing the lateral stiffness of the side sill 4, so that the underbody structure of this embodiment can perform an increased effect of preventing the side sill 4 from bending in a reliable fashion.

In particular, because the interconnect cross member 111 is mounted at a low position in this embodiment, it is possible to provide a passenger compartment with wide space.

### SIXTH EMBODIMENT

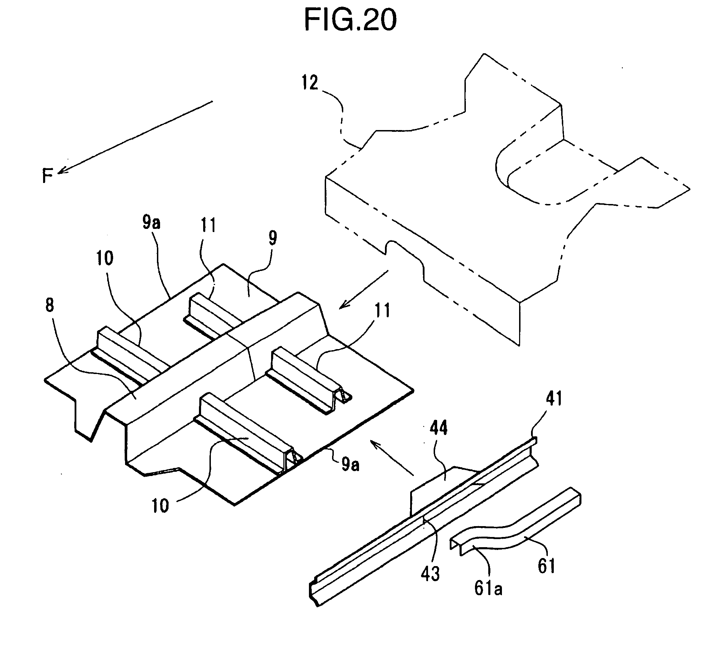

An underbody structure of a vehicle V according to a sixth embodiment of the present invention is now described with reference to FIGS. 20 to 23.

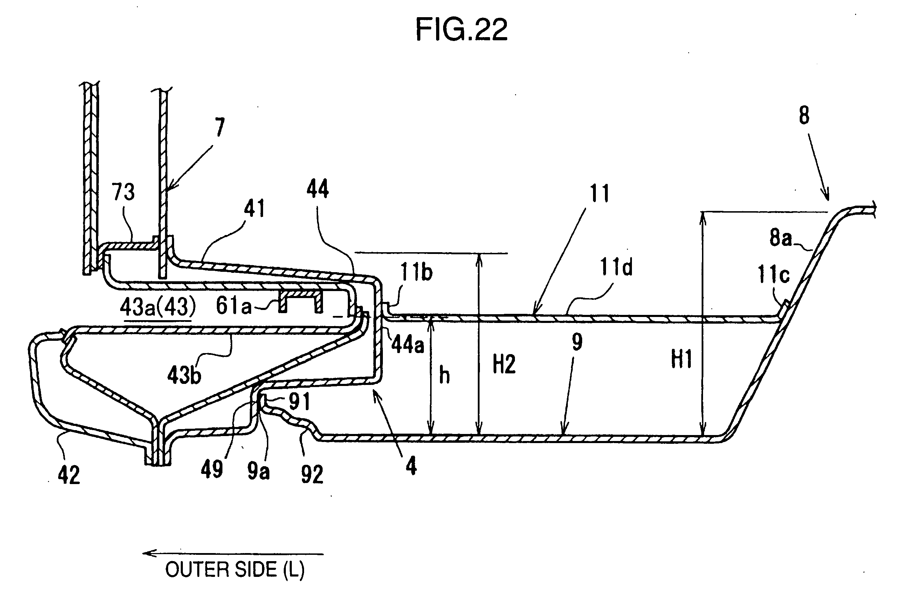

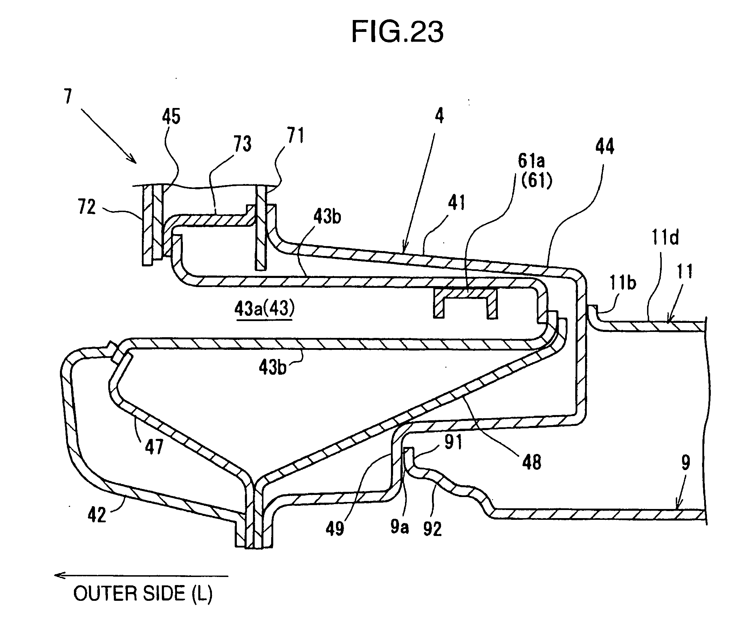

Referring to FIGS. 22 and 23, an outer flange 91 of a floor panel 9 is attached to a lower part of a side sill 4, more specifically to a joint part 49 of an inner sill part 41 of the side sill 4 located at a low position thereof below a protruding part 44 of the inner sill part 41, on each side (left and right) of the vehicle V to form a floor of a passenger compartment, in which the protruding part 44 of the inner sill part 41 overlaps the floor panel 9 in plan view. As the floor panel 9 is attached to the lower part of the side sill 4 in this way, it is possible to lower the floor of the passenger compartment and thereby provide as wide a passenger space as possible.

To make the floor of the passenger compartment as low as possible, an outer periphery of the floor panel 9 is shaped to form a step-like portion 92 which is further lowered from the outer flange 91.

In the underbody structure of this embodiment, each lateral end 9a of the floor panel 9 forms a straight line parallel to the longitudinal axis of the vehicle V as shown in FIG. 20 regardless of the shape of the protruding part 44.

Since the floor panel 9 has a generally rectangular shape with the straight lateral ends 9a like conventional floor panels of ordinary swing-door vehicles, it would be possible to assure the versatility of the floor panel 9 of this embodiment in other vehicle models.

Additionally, since each lateral end 9a of the floor panel 9 is shaped in a straight line, it is possible to easily join the floor panel 9 to the joint part 49 of the inner sill part 41 by utilizing conventional assembly and joint methods without regard to the shape of the protruding part 44.

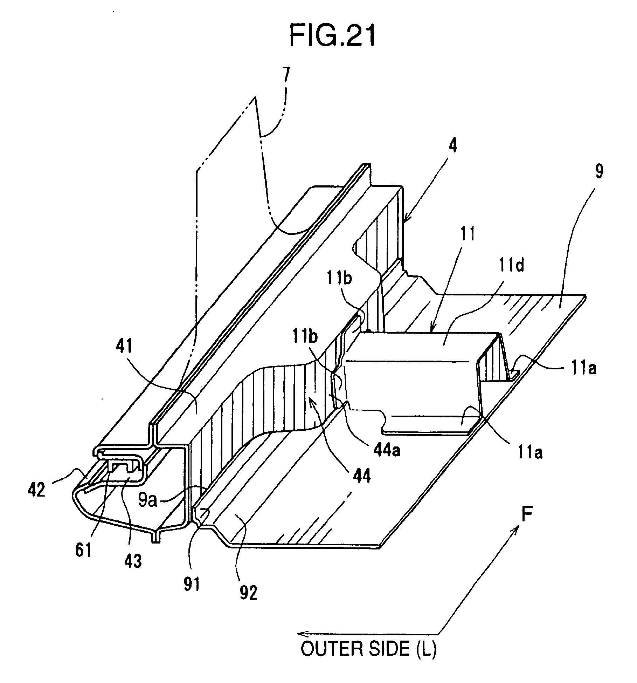

Referring to FIG. 21, the interconnect cross member 11 is a structural member having a generally hat-shaped cross section. The interconnect cross member 11 has lower front and rear flanges 11a which are attached to the top surface of the floor panel 9 as well as outer end flanges 11b extending upward, frontward, and rearward which are attached to the inside wall 44a of the protruding part 44 of the side sill 4. Additionally, as shown in FIG. 22, the interconnect cross member 11 has an inner end flange 11c which is attached to the side surface 8a of the center rib 8. The interconnect cross member 11 is affixed between the protruding part 44 of the side sill 4 and the center rib 8 in this fashion.

In the sixth embodiment, the lateral end 9a of the floor panel 9 is shaped in a straight line as described above, and the protruding part 44 of the side sill 4 bulges into the vehicle interior above the lateral end 9a of the floor panel 9 as shown in FIG. 21. This structure makes it possible to join the floor panel 9 to the joint part 49 of the inner sill part 41 having a flat surface and thereby provide improved passenger compartment sealability. Also, as the floor panel 9 is attached to the inner sill part 41 as illustrated in FIG. 21, vertical displacement of the protruding part 44 formed in a cantilever fashion is restricted by the interconnect cross member 11. This makes it possible to reliably hold the protruding part 44 of the side sill 4 at a fixed vertical position and prevent loose vibratory motion of the protruding part 44.

In the above-described underbody structure of the sixth embodiment, the joint part 49 of the inner sill part 41 attached to the outer flange 91 of the floor panel 9 is formed at a lower portion of the inner sill part 41 so that the joint part 49 extends below the protruding part 44 at right angles to a bulging direction thereof. Thus, it is possible to join the floor panel 9 to the side sill 4 without forming a recessed part or the like in the lateral end 9a of the floor panel 9 at a corresponding portion facing the protruding part 44. For this reason, the floor panel 9 has the straight-cut lateral ends 9a like the conventional floor panels and therefore, the floor panel 9 and the side sill 4 can be assembled and attached together by the conventional assembly and joint methods. Accordingly, the above-described underbody structure of the sixth embodiment applied to the vehicle V provided with the sliding side doors 2 makes it possible to simplify component shapes and improve assembling efficiency without deteriorating sealability between the floor panel 9 and the side sill 4 even when the protruding part 44 bulging to the interior of the vehicle V is formed on the inner sill part 41. Since the floor panel 9 is attached to the inner sill part 41 at the lower portion thereof, it is possible to locate the floor panel 9 at a low position and thereby provide a passenger compartment with wide space.

As the protruding part 44 formed in a cantilever fashion bulging inward above the floor panel 9 is attached to the lower portion of the inner sill part 41 via the interconnect cross member 11 in the above-described sixth embodiment, vertical motion of the protruding part 44 of the inner sill part 41 is restricted by the interconnect cross member 11, so that the protruding part 44 is reinforced in this structure. In the underbody structure of the sixth embodiment, the interconnect cross member 11 serves to increase the stiffness of the side sill 4 which becomes less stiff due to the provision of the slide rail accommodating part 43 and the protruding part 44, thereby increasing overall stiffness of the side sill 4.

### SEVENTH EMBODIMENT

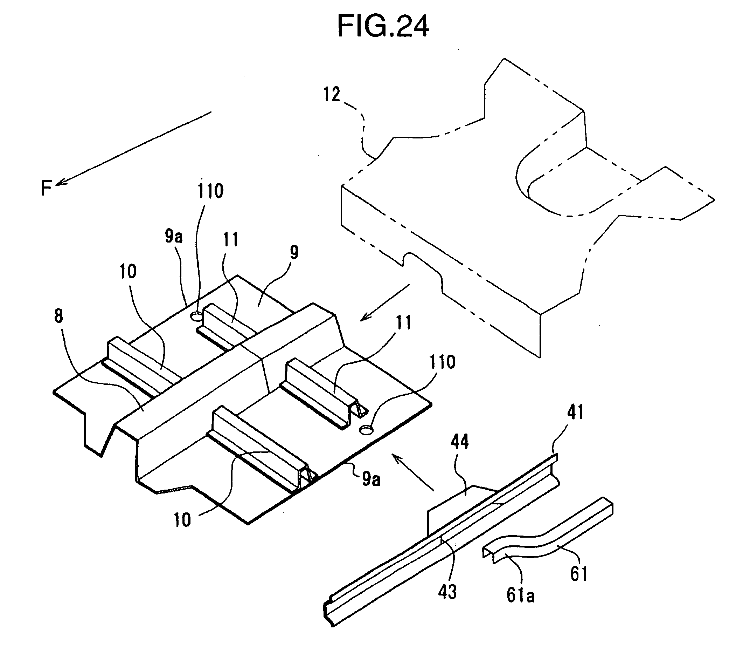

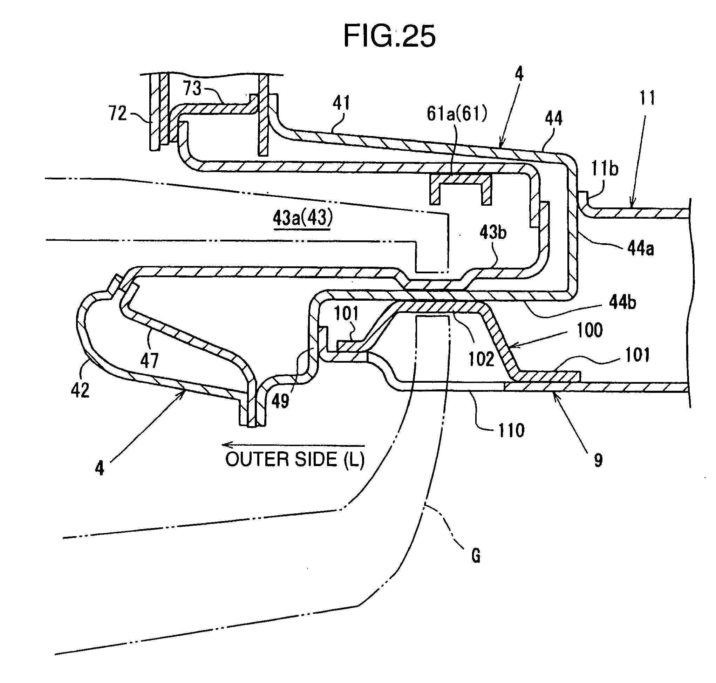

An underbody structure of a vehicle V according to a seventh embodiment of the present invention is now described with reference to FIGS. 24 and 25.

Referring to FIG. 25, a support bracket 100 is placed between the protruding part 44 and the floor panel 9 to support the protruding part 44 formed in a cantilever fashion by the floor panel 9 located below in this embodiment. Specifically, the floor panel 9 is attached to a bottom surface of the side sill 4 to reinforce the cantilevered protruding part 44 from under. Further more, the support bracket 100 is a structural member with a generally hat-shaped cross section having inner and outer flanges 101 which are attached to the floor panel 9 and an upper portion 102 which is attached to a bottom 44b of the protruding part 44 as shown in FIG. 25.

The upper portion 102 of the support bracket 100 is attached not only to the protruding part 44 but to the rail bracket 43b of the slide rail accommodating part 43 by spot welding. These three elements 100, 44, 43b are attached by use of a spot welding gun G shown by alternate long and two short dashed lines in FIG. 25, for example.

The support bracket 100 assembled and attached between the protruding part 44 and the floor panel 9 in the above-described fashion can prevent vertical vibratory motion of the protruding part 44 almost completely and sturdily sustain a load transmitted to the protruding part 44 even when the weight of the sliding door 2 lies on the protruding part 44. To enable spot welding of the aforementioned three elements 100, 44, and 43b, there is formed a hole 110 in the floor panel 9 at a position located below the protruding part 44 on each side (left and right) of the vehicle V as shown in FIG. 24. This makes it possible to easily join support bracket 100, the protruding part 44, and the rail bracket 43b.

Alternatively, a protrusion shaped like the support bracket 100 may be formed on the floor panel 9 as an integral part thereof for supporting the protruding part 44. In this alternative, however, the floor panel 9 must be produced by press forming exclusively for sliding-door vehicles. For this reason, the floor panel 9 of the seventh embodiment for the sliding-door floor panel 9 is manufactured by making the hole 110 for later spot welding in a press-formed floor panel prepared for common use with swing-door vehicles as shown in FIG. 24. This approach makes it possible to assure the versatility of the floor panel 9 in swing-door and sliding-door vehicles. Incidentally, the hole 110 in the floor panel 9 is completely sealed when the support bracket 100 is attached so that the hole 110 does not deteriorate sealability of the passenger compartment. Since the protruding part 44 of the inner sill part 41 is sturdily supported by the support bracket 100 mounted on the floor panel 9 in the seventh embodiment, it is possible to restrict vertical displacement of the cantilevered protruding part 44 in a reliable fashion. This structure improves the protruding part to be capable in withstanding the vertical load 44 and therefore, the protruding part 44 would not produce vibratory motion even when the weight of the sliding door 2 or other load is applied on the protruding part 44 through the slide rail accommodating part 43. It is appreciated from the foregoing discussion that the underbody structure of the seventh embodiment serves to increase the stiffness of the protruding part 44 even when the protruding part 44 is formed in a cantilever fashion.

Especially because the upward projecting support bracket 100 mounted on the floor panel 9 upholds the protruding part 44 of the inner sill part 41 in the seventh embodiment, the protruding part 44 is directly supported by the floor panel 9. As the protruding part 44 is integrally attached to the floor panel 9 by the support bracket 100 in this way, strength of the protruding part 44 is increased in a reliable fashion.

According to the seventh embodiment, the hole 110 is formed in the floor panel 9 to enable spot welding so that the support bracket 100 placed between the protruding part 44 of the inner sill part 41 and the floor panel 9 can be attached to the floor panel 9 by utilizing the hole 110. Therefore, it is possible to support the protruding part 44 by the floor panel 9 without the need to form any upward protrusion on the floor panel 9. The floor panel 9 of the seventh embodiment thus structured can assure the versatility in the sliding-door vehicle V and in ordinary swing-door vehicles.

### EIGHTH EMBODIMENT

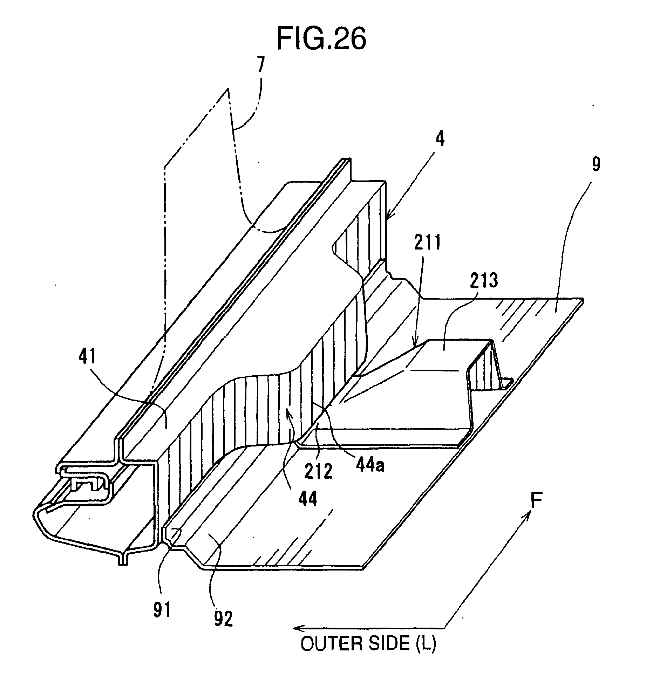

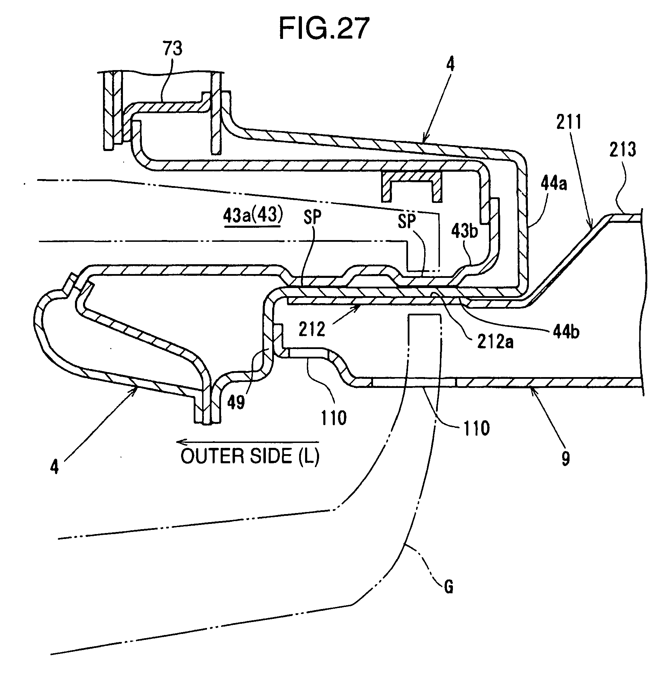

An underbody structure of a vehicle V according to an eighth embodiment of the present invention is now described with reference to FIGS. 26 and 27.

The underbody structure of this embodiment is characterized in that an interconnect cross member 211 on each side of the vehicle V extends outward up to a position immediately below the protruding part 44 of the inner sill part 41 and a top surface of the interconnect cross member 211 is attached to the bottom 44b of the protruding part 44, whereby the interconnect cross member 211 is used as a support member for the protruding part 44.

Specifically, an outer end portion 212 of the interconnect cross member 211 is made lower than an inner end portion 213 thereof, and with the outer end portion 212 of the interconnect cross member 211 positioned beneath the protruding part 44 of the inner sill part 41, an upper flat portion 212a of the outer end portion 212 is spot-welded the bottom 44b of the protruding part 44 and to the rail bracket 43b of the slide rail accommodating part 43, whereby the protruding part 44 is attached to the floor panel 9.

There are also formed holes 110 in the floor panel 9 to facilitate spot welding in the eighth embodiment.

In this embodiment, there are provided two spot welding points SP on each side (left and right) of the vehicle V to impart strength to withstand a side impact occurring in the event of a lateral collision. It is possible to uphold the protruding part 44 of the side sill 4 at a fixed vertical position by utilizing the interconnect cross member 211 as described above without the need to provide the separate support bracket 100.

Additionally, as shown in FIG. 27, the inner end portion 213 of the interconnect cross member 211 is raised from the outer end portion 212 thereof such that the inner end portion 213 faces to the inside wall 44a of the protruding part 44. This structure serves to prevent the protruding part 44 of the inner sill part 41 from intruding into the vehicle interior and the side sill 4 from bending in the event of a lateral collision.

In the above-described underbody structure of the eighth embodiment, the protruding part 44 of the inner sill part 41 is supported on the floor panel 9 utilizing the interconnect cross member 211 laterally extending between the protruding part 44 and the center rib 8. It is therefore possible to hold the protruding part 44 at a fixed vertical position by effective use of the interconnect cross member 211 which is a structural member for increasing the lateral stiffness of the side sill 4. Accordingly, it is possible to increase the strength of the protruding part 44 in a vertical direction while achieving an effect of preventing the side sill 4 from bending in this embodiment.

Furthermore, it is possible to restrict vertical motion of the protruding part 44 of the inner sill part 41 by the outer end portion 212 of the interconnect cross member 211 while preventing the protruding part 44 from intruding into the vehicle interior by the inner end portion 213 of the interconnect cross member 211 in the aforementioned eighth embodiment. It is appreciated from the foregoing discussion that the single interconnect cross member 211 can improve overall stiffness of the side sill 4 while preventing bending of the side sill 4 in the event of a lateral collision and vertical displacement of the protruding part 44 in a reliable fashion.

### NINTH EMBODIMENT

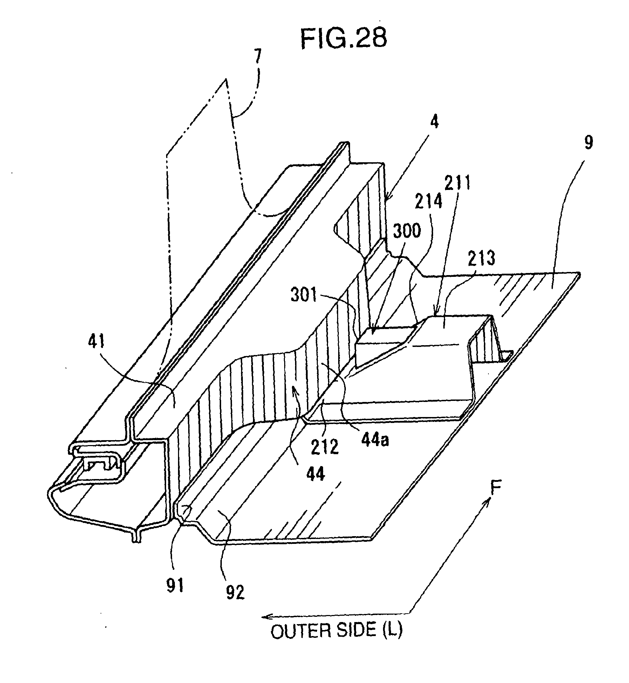

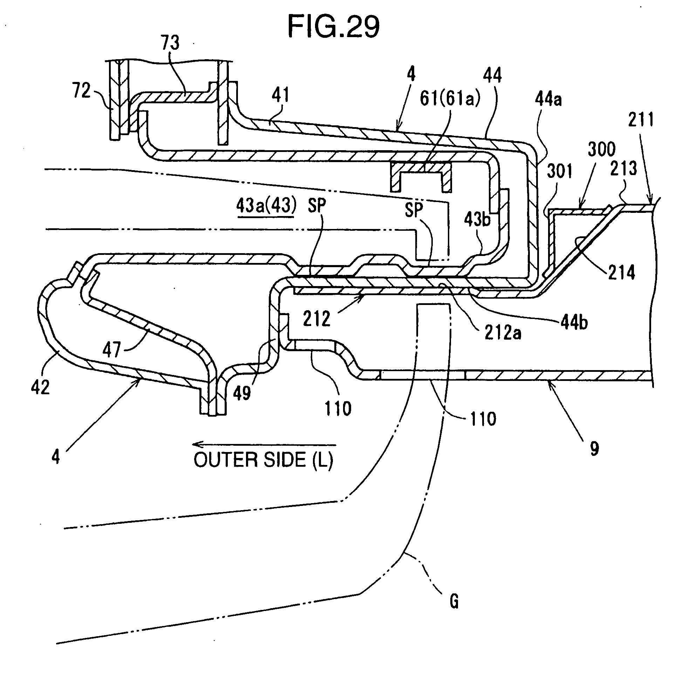

An underbody structure of a vehicle V according to a ninth embodiment of the present invention is now described with reference to FIGS. 28 and 29.

As compared to the aforementioned eighth embodiment, the underbody structure of the ninth embodiment is characterized in that the interconnect cross member 211 is further provided with a contact bracket 300 which is structured such that the interconnect cross member 211 would receive a side impact applied to the side sill 4 or from the protruding part 44 in the event of a lateral collision in a reliable fashion.

Specifically, the interconnect cross member 211 has a slant portion or sloping end 214 which slops from the inner end portion 213 to the outer end portion 212, and the contact bracket 300 formed by bending a piece of metal into a generally triangular shape is attached to the slant portion 214 of the interconnect cross member 211 in such a manner that an outside wall 301 of the contact bracket 300 faces the inside wall 44a of the protruding part 44.

With the provision of the contact bracket 300 thus structured, a load applied through the protruding part 44 of the inner sill part 41 in the event of a lateral collision is transmitted to the interconnect cross member 211 and received by the floor panel 9 in a reliable fashion even when spot-welded joints break due to a large impact. Accordingly, the underbody structure of this embodiment prevents bending of the side sill 4 in a reliable fashion. It is appreciated from the above that the side impact load which would applied on the side sill 4 is more reliably transmitted to the interconnect cross member 211 due to the provision of the contact bracket 300. Therefore, even when the outer end portion 212 and the inner end portion 213 of the interconnect cross member 211 have different heights, the underbody structure of the present embodiment can reliably transmit the side impact load to the interconnect cross member 211 and prevent the side sill 4 from bending inwardly.

It is to be noted that the contact bracket 300 attached to the interconnect cross member 211 need not necessarily be shaped as explained above. The above-described ninth embodiment may be modified such that the contact bracket 300 is made by forming a piece of metal into a wide-open V-shape or a T-shape, for example.

In the above descriptions, members 11, 111, and 211 are example of a cross member in claims.

Similarly, B-pillar is an example of a pillar in claims; the extended part 170 is an example of an extended part; the bracket 200 is an example of a support member; the tray-like reinforcement member 51 is an example of a reinforcement member in claims;
the members 100 and 212 are an example of a support member in claims;
the support member 100 is an example of a hat-shaped member in claims;
the bracket 300 is an example of a contact member in claims; and
the slant portion is an example of a sloping edge in claims.

### VARIATIONS OF THE EMBODIMENTS

It is to be understood that the present invention is not limited to the foregoing embodiments but is applicable to various types of sliding-door vehicles. While the present invention has thus far been described with reference to the mini-van-type vehicles, the present invention would be applied to such vehicles as sedans or station wagons. The invention is also applicable to vehicles of pillar-less design with no B-pillars.

Although the present invention has been described in terms of specific exemplary embodiments, it will be appreciated that various changes and modifications may be made by those skilled in the art without departing from scope of the present invention, as defined in the following claims.

## Claims

1. Underbody structure of a sliding-door vehicle provided with: a side sill (4) extending parallel to a longitudinal centerline (LN) of the vehicle (V) at a lower end of a side door opening (1) formed in a vehicle (V) body; a floor panel (9) attached to a lower part of the side sill (4) forming a floor of a passenger compartment; a center rib (8) formed at a center of the floor panel (9) so projected as to extend along with the longitudinal centerline (LN) of the vehicle (V); and inner and outer sill parts (41 and 42) which form the side sill (4), wherein the inner sill part (41) forms a rail accommodating part (43) which accommodates a lower rail that holds a lower part of the sliding side door,
wherein a protruding part (44) formed on the inner sill part (41) and is so bulging to the interior of the vehicle (V) to form the rail accommodating part (43) and, **characterized in that**
a cross member (11, 111, 211) extends along a lateral direction of the vehicle (V) on the floor panel (9) and interconnects the protruding part (44) of the inner sill part and the center rib (8) of the floor panel (9).

2. Underbody structure of the sliding-door vehicle according to claim 1, wherein the center rib (8) is higher than the side sill (4).

3. Underbody structure of the sliding-door vehicle according to claim 1 or 2, wherein a vertically extending pillar (7) is attached to an upper part of the side sill (4), and a lower end portion of an inner pillar part (71) constituting the pillar (7) is shaping an extended part (170) which is laterally extending into the interior of the vehicle (V) and is covering the protruding part (44) of the inner sill part (41) to join to the cross member (11).

4. Underbody structure of the sliding-door vehicle according to claim 3, wherein the extended part (170) of the inner pillar part (71) downwardly extends beside the protruding part (44).

5. Underbody structure of the sliding-door vehicle according to one of claims 1 to 4 further includes a reinforcement member (51) laterally extending below the rail accommodating part (43) which is located within the protruding part (44) of the inner sill part (41), the reinforcement member (51) being located to overlap the cross member (11) in side view.

6. Underbody structure of the sliding-door vehicle according to claim 5, wherein the cross member (111) is a member which is generally hat-shaped cross section having a pair of flanges (111a, 111b) attached on the floor panel (9) and which has an upper portion (111d) whose height (i) is determined such that the upper portion (111d) of the cross member (111) faces to a side wall of the reinforcement member (5).

7. Underbody structure of the sliding-door vehicle according to claim 5 or 6, wherein the reinforcement member (51) is a laterally extending member having a boxlike shape.

8. Underbody structure of the sliding-door vehicle according to claim 5, 6 or 7, wherein the reinforcement member (51) is attached to a bottom surface (50) of the rail accommodating part (43).

9. Underbody structure of the sliding-door vehicle according to one of claims 1 to 7, wherein the floor panel (9) is so attached to the inner sill part (41) as to form a joint part (49) located at a low position of the inner sill part so that the protruding part (44) of the inner sill part (41) projects above the floor panel (9).

10. Underbody structure of the sliding-door vehicle according to claim 9 further includes a support member (100) placed between the protruding part (44) of the inner sill part (41) and the floor panel (9) to support the protruding part (44).

11. Underbody structure of the sliding-door vehicle according to claim 10, wherein the support member (100) is made of a protrusion projecting upward from the floor panel (9).

12. Underbody structure of the sliding-door vehicle according to claim 11, the floor panel (9) is formed therein a hole (110) for spot welding at the proximity of the protruding part (44) of the inner sill part (41), and the support member (100) is a member having a generally hat-shaped cross section placed between the hole (110) and the protruding part (44), the support member (100) having an upper portion (102) attached to the protruding part (44) and a lower portion (101) attached to the floor panel (9) around the hole (110) for spot welding.

13. Underbody structure of the sliding-door vehicle according to one of claims 10 to 12, wherein the support member (100) is made of an outer portion (212) of the cross member (211).

14. Underbody structure of the sliding-door vehicle according to claim 13, wherein the cross member (211) has the outer portion (212) which is attached to a bottom surface (44b) of the protruding part (44) of the inner sill part (41) and an inner portion (213) which projects higher than the outer portion (212) in an area closer to the longitudinal centerline (LN) of the vehicle (V) than the protruding part (44), and wherein the inner portion (213) of the cross member (211) faces to a side portion (44a) of the protruding part (44).

15. Underbody structure of the sliding-door vehicle according to claim 14, wherein a sloping edge (214) is formed at an upper portion of the cross member (211) which slops from the inner portion (213) to the outer portion (212) of the cross member (211), and a contact member (300) which is disposed on the sloping edge and goes into contact with the protruding part (44) of the inner sill part (41) in the event of a lateral collision of the vehicle (V).

16. Underbody structure of the sliding-door vehicle according to one of claims 1 to 15, wherein the height of the cross member (11) is determined such that the cross member (11) faces to a side wall of the rail accommodating part (43) formed in the protruding part (44) of the inner sill part (41).

17. Underbody structure of the sliding-door vehicle according to one of claims 1 to 15, wherein the cross member (11) is a member having a generally hat-shaped cross section.

18. Underbody structure of the sliding-door vehicle according to claim 17, wherein the height of an upper portion (11d) of the cross member (11) is determined such that the upper portion (11d) of the cross member (11) faces to a side portion (44a) of the protruding part (44) of the inner sill part (41).

19. Underbody structure of the sliding-door vehicle according to claim 17, wherein the height of the top of the floor panel (9) is determined such that the cross member (11) faces to a side wall of the rail accommodating part (43).

20. Underbody structure of the sliding-door vehicle according to claim 17, wherein a support member (200) is provided inside a portion of the cross member (11) close to a joint between the cross member (11) and the protruding part (44) of the inner sill part (41).

## Patentansprüche

1. Bodengruppe eines Schiebetür-Fahrzeugs, die versehen ist mit: einer sich parallel zu einer Längsmittellinie (LN) des Fahrzeugs (V) erstreckenden Seitenschwelle (4) an einem unteren Ende einer in einer Karosserie eines Fahrzeugs (V) ausgebildeten Seitentüröffnung (1); einem an einem unteren Teil der Seitenschwelle (4) angebrachten Bodenblech (9), das einen Boden eines Fahrzeuginnenraums bildet; einem an einer Mitte des Bodenblechs (9) ausgebildeten mittleren Steg (9), der so hervorragt, dass er sich zusammen mit der Längsmittellinie (LN) des Fahrzeugs (V) erstreckt; und innerem sowie äußerem Schwellenteile (41 und 42), die die Seitenschwelle (4) bilden, wobei der innere Schwellenteil (41) einen Schienenaufnahmeteil (43) bildet, der eine untere Schiene aufnimmt, die einen unteren Teil der Schiebeseitentür hält,
wobei ein an dem inneren Schwellenteil (41) ausgebildeter hervorstehender Teil (44) sich zum Inneren des Fahrzeugs (V) wölbt, um den Schienenaufnahmeteil (43) zu bilden, und **dadurch gekennzeichnet, dass**
ein Querelement (11, 111, 211) sich entlang einer Seitenrichtung des Fahrzeugs (V) auf dem Bodenblech (9) erstreckt und den hervorstehenden Teil (44) des inneren Schwellenteils und den mittleren Steg (8) des Bodenblechs (9) miteinander verbindet.

2. Bodengruppe des Schiebetürfahrzeugs nach Anspruch 1, wobei der mittlere Steg (8) höher als die Seitenschwelle (4) ist.

3. Bodengruppe des Schiebetürfahrzeugs nach Anspruch 1 oder 2, wobei eine sich vertikal erstreckende Säule (7) an einem oberen Teil der Seitenschwelle (4) angebracht ist und ein unterer Endabschnitt eines die Säule (7) bildenden inneren Säulenteils (71) einen verlängerten Teil (170) formt, der sich seitlich in das Innere des Fahrzeugs (V) erstreckt und den hervorstehenden Teil (44) des inneren Schwellenteils (41) bedeckt, um mit dem Querelement (11) zu verbinden.

4. Bodengruppe des Schiebetürfahrzeugs nach Anspruch 3, wobei sich der verlängerte Teil (170) des inneren Säulenteils (71) neben dem hervorstehenden Teil (44) nach unten erstreckt.

5. Bodengruppe des Schiebetürfahrzeugs nach einem der Ansprüche 1 bis 4, welche weiterhin ein Verstärkungselement (51) umfasst, das sich seitlich unter dem Schienenaufnahmeteil (43) erstreckt, der in dem hervorstehenden Teil (44) des inneren Schwellenteils (41) angeordnet ist, wobei das Verstärkungselement (51) so angeordnet ist, dass es in Seitenansicht das Querelement (11) überdeckt.

6. Bodengruppe des Schiebetürfahrzeugs nach Anspruch 5, wobei das Querelement (111) ein Element ist, das im Allgemeinen von hutförmigem Querschnitt ist, mit einem an dem Bodenblech (9) angebrachten Paar Flanschen (111 a, 111 b), und das einen oberen Abschnitt (111 d) aufweist, dessen Höhe (i) so bestimmt wird, dass der obere Abschnitt (111d) des Querelements (111) einer Seitenwand des Verstärkungselements (5) zugewandt ist.

7. Bodengruppe des Schiebetürfahrzeugs nach Anspruch 5 oder 6, wobei das Verstärkungselement (51) ein sich seitlich erstreckendes Element mit einer kastenähnlichen Form ist.

8. Bodengruppe des Schiebetürfahrzeugs nach Anspruch 5, 6 oder 7, wobei das Verstärkungselement (51) an einer Bodenfläche (50) des Schienenaufnahmeteils (43) angebracht ist.

9. Bodengruppe des Schiebetürfahrzeugs nach einem der Ansprüche 1 bis 7,
wobei das Bodenblech (9) so an dem inneren Schwellenteil (41) angebracht ist, dass es einen verbundenen Teil (49) bildet, der sich an einer unteren Position des inneren Schwellenteils befindet, so dass der hervorstehende Teil (44) des inneren Schwellenteils (41) über das Bodenblech (9) ragt.

10. Bodengruppe des Schiebetürfahrzeugs nach Anspruch 9, welche weiterhin ein zwischen den hervorstehenden Teil (44) des inneren Schwellenteils (41) und das Bodenblech (9) gesetztes Tragelement (100) zum Tragen des hervorstehenden Teils (44) umfasst.

11. Bodengruppe des Schiebetürfahrzeugs nach Anspruch 10, wobei das Tragelement (100) aus einem Vorsprung besteht, der von dem Bodenblech (9) nach oben ragt.

12. Bodengruppe des Schiebetürfahrzeugs nach Anspruch 11, wobei das Bodenblech (9) darin mit einem Loch (110) zum Punktschweißen in der Nähe des hervorstehenden Teils (44) des inneren Schwellenteils (41) ausgebildet ist und das Tragelement (100) ein Element mit einem im Allgemeinen hutförmigen Querschnitt ist, das zwischen das Loch (110) und den hervorstehenden Teil (44) gesetzt ist, wobei das Tragelement (100) einen an dem hervorstehenden Teil (44) angebrachten oberen Abschnitt (102) und einen an dem Bodenblech (9) um das Loch (110) zum Punkschweißen angebrachten unteren Abschnitt (101) aufweist.

13. Bodengruppe des Schiebetürfahrzeugs nach einem der Ansprüche 10 bis 12, wobei das Tragelement (100) aus einem äußeren Abschnitt (212) des Querelements (211) besteht.

14. Bodengruppe des Schiebetürfahrzeugs nach Anspruch 13, wobei das Querelement (211) den äußeren Abschnitt (212), der an einer unteren Fläche (44b) des hervorstehenden Teils (44) des inneren Schwellenteils (41) angebracht ist, und einen inneren Abschnitt (213), der höher als der äußere Abschnitt (212) in einem Bereich näher zu der Längsmittellinie (LN) des Fahrzeugs (V) als der hervorstehende Teil (44) ragt, aufweist, und wobei der innere Abschnitt (213) des Querelements (211) einem Seitenabschnitt (44a) des hervorstehenden Teils (44) zugewandt ist.

15. Bodengruppe des Schiebetürfahrzeugs nach Anspruch 14, wobei eine Schrägkante (214) an einem oberen Abschnitt des Querelements (211) ausgebildet ist, die von dem inneren Abschnitt (213) zu dem äußeren Abschnitt (212) des Querelements (211) geneigt ist, und ein Kontaktelement (300), das an der Schrägkante angeordnet ist und mit dem hervorstehenden Teil (44) des inneren Schwellenteils (41) im Fall einer seitlichen Kollision des Fahrzeugs (V) in Kontakt tritt.

16. Bodengruppe des Schiebetürfahrzeugs nach einem der Ansprüche 1 bis 15, wobei die Höhe des Querelements (11) so bestimmt ist, dass das Querelement (11) einer Seitenwand des Schienenaufnahmeteils (43) zugewandt ist, das in dem hervorstehenden Teil (44) des inneren Schwellenteils (41) ausgebildet ist.

17. Bodengruppe des Schiebetürfahrzeugs nach einem der Ansprüche 1 bis 15, wobei das Querelement (11) ein Element mit einem im Allgemeinen hutförmigen Querschnitt ist.

18. Bodengruppe des Schiebetürfahrzeugs nach Anspruch 17, wobei die Höhe eines oberen Abschnitts (11d) des Querelements (11) so bestimmt wird, dass der obere Abschnitt (11d) des Querelements (11) einem Seitenabschnitt (44a) des hervorstehenden Teils (44) des inneren Schwellenteils (41) zugewandt ist.

19. Bodengruppe des Schiebetürfahrzeugs nach Anspruch 17, wobei die Höhe der Oberseite des Bodenblechs (9) so bestimmt ist, dass das Querelement (11) einer Seitenwand des Schienenaufnahmeteils (43) zugewandt ist.

20. Bodengruppe des Schiebetürfahrzeugs nach Anspruch 17, wobei ein Tragelement (200) in einem Abschnitt des Querelements (11) nahe einer Verbindung zwischen dem Querelement (11) und dem hervorstehenden Teil (44) des inneren Schwellenteils (41) vorgesehen ist.

## Revendications

1. Bas de caisse de véhicule à portes coulissantes doté : d'un marchepied latéral (4) s'étendant parallèlement vers une ligne de centrage longitudinale (LN) du véhicule (V) à une extrémité inférieure d'une ouverture de porte latérale (1) réalisée dans une caisse de véhicule (V) ; d'un panneau (9) fixé à une partie surbaissée du marchepied latéral (4) formant un plancher d'un compartiment des passagers ; d'un renfort central (8) réalisé au centre du panneau (9) dressé de manière à s'allonger le long de la ligne de centrage longitudinale (LN) du véhicule (V) ; et de pièces de marchepied intérieures et extérieures (41 et 42) qui forment le marchepied latéral (4), dans lequel la pièce de marchepied intérieure (41) forme une pièce adaptable de rail (43) qui adapte un rail surbaissé qui possède une pièce surbaissée de la porte coulissante latérale,
dans lequel une pièce en saillie (44) réalisée sur la pièce de marchepied intérieure (41) et faisant saillie vers l'intérieur du véhicule (V) pour former la pièce adaptable de rail (43) et, **caractérisé en ce que**
une traverse (11, 111, 211) s'allonge le long d'une direction latérale du véhicule (V) sur le panneau (9) et interconnecte la pièce en saillie (44) de la pièce de marchepied intérieure et le renfort central (8) du panneau (9).

2. Bas de caisse du véhicule à portes coulissantes selon la revendication 1, dans lequel le renfort central (8) est plus haut que le marchepied latéral (4).

3. Bas de caisse du véhicule à portes coulissantes selon les revendications 1 ou 2, dans lequel une colonne à extension verticale (7) est fixée à une partie supérieure du marchepied latéral (4), et une partie finale surbaissée d'une pièce intérieure de colonne (71) constituant la colonne (7) forme une pièce allongée (170) qui s'allonge latéralement à l'intérieur du véhicule (V) et couvre la pièce en saillie (44) de la pièce de marchepied intérieure (41) à assembler à la traverse (11).

4. Bas de caisse du véhicule à portes coulissantes selon la revendication 3, dans lequel la pièce allongée (170) de la pièce intérieure de colonne (71) s'allonge vers le bas à côté de la pièce en saillie (44).

5. Bas de caisse du véhicule à portes coulissantes selon l'une des revendications 1 à 4 comprenant également un élément de renforcement (51) s'allongeant latéralement au-dessous de la pièce adaptable de rail (43) qui est placée à l'intérieur de la pièce en saillie (44) de la pièce de marchepied intérieure (41), l'élément de renforcement (51) étant placé de manière à chevaucher la traverse (11) en vue latérale.

6. Bas de caisse du véhicule à portes coulissantes selon la revendication 5, dans lequel la traverse (111) est un élément qui est généralement une coupe transversale en forme de chapeau dotée d'une paire de brides (111 a, 111 b) fixées sur le panneau (9) et qui présente une partie supérieure (111d) dont la hauteur (i) est déterminée de manière à ce que la partie supérieure (111d) de la traverse (111) fait face à la paroi latérale de l'élément de renforcement (5).

7. Bas de caisse du véhicule à portes coulissantes selon les revendications 5 ou 6, dans lequel l'élément de renforcement (51) est un élément s'allongeant latéralement et ayant une forme de boîte.

8. Bas de caisse du véhicule à portes coulissantes selon les revendications 5, 6 ou 7, dans lequel l'élément de renforcement (51) est fixé à une surface inférieure (50) de la pièce adaptable de rail (43).

9. Bas de caisse du véhicule à portes coulissantes selon l'une des revendications 1 à 7, dans lequel le panneau (9) est fixé à la pièce de marchepied intérieure (41) de manière à former une pièce de jointure (49) située sur une position basse de la pièce de marchepied intérieure de sorte que la pièce en saillie (44) de la pièce de marchepied intérieure (41) se dresse au-dessus du panneau (9).

10. Bas de caisse du véhicule à portes coulissantes selon la revendication 9 comprenant par ailleurs un élément de support (100) placé entre la pièce en saillie (44) de la pièce de marchepied intérieure (41) et le panneau (9) pour porter la pièce en saillie (44).

11. Bas de caisse du véhicule à portes coulissantes selon la revendication 10, dans lequel l'élément de support (100) est constitué d'une proéminence se dressant vers le haut à partir du panneau (9).

12. Bas de caisse du véhicule à portes coulissantes selon la revendication 11, le panneau (9) étant réalisé à l'intérieur d'un trou (110) pour la soudure par point à proximité de la pièce en saillie (44) de la pièce de marchepied intérieure (41), et l'élément de support (100) étant un élément présentant une section transversale généralement en forme de chapeau placée entre le trou (110) et la pièce en saillie (44), l'élément de support (100) présentant une partie supérieure (102) fixé à la pièce en saillie (44) et une partie surbaissée (101) fixée au panneau (9) autour du trou (110) pour la soudure par point.

13. Bas de caisse du véhicule à portes coulissantes selon l'une des revendications 10 à 12, dans lequel l'élément de support (100) est constitué d'un élément extérieur (212) de la traverse (211).

14. Bas de caisse du véhicule à portes coulissantes selon la revendication 13, dans lequel la traverse (211) est dotée de la partie extérieure (212) qui est fixée à une surface inférieure (44b) de la pièce en saillie (44) de la pièce de marchepied intérieure (41) et d'une partie intérieure (213) qui se dresse plus haut que la partie extérieure (212) dans une zone plus proche de la ligne de centrage longitudinale (LN) du véhicule (V) que la pièce en saillie (44), et dans lequel la partie intérieure (213) de la traverse (211) fait face à une partie latérale (44a) de la pièce en saillie (44).

15. Bas de caisse du véhicule à portes coulissantes selon la revendication 14, dans lequel un angle de déclivité (214) est réalisé sur une partie supérieure de la traverse (211) qui dépasse de la partie intérieure (213) vers la partie extérieure (212) de la traverse (211), et un élément de contact (300) qui est disposé sur l'angle de déclivité et entre en contact avec la pièce en saillie (44) de la pièce de marchepied intérieure (41) en cas de collision latérale du véhicule (V).

16. Bas de caisse du véhicule à portes coulissantes selon l'une des revendications 1 à 15, dans lequel la hauteur de la traverse (11) est déterminée de manière à ce que la traverse (11) se trouve face à une paroi latérale de la pièce adaptable de rail (43) réalisée dans la pièce en saillie (44) de la pièce de marchepied intérieure (41).

17. Bas de caisse du véhicule à portes coulissantes selon l'une des revendications 1 à 15, dans lequel la traverse (11) est un élément doté d'une coupe transversale généralement en forme de chapeau.

18. Bas de caisse du véhicule à portes coulissantes selon la revendication 17, dans lequel la hauteur d'une partie supérieure (11d) de la traverse (11) est déterminée de manière à ce que la partie supérieure (11d) de la traverse (11) se trouve face à une partie latérale (44a) de la pièce en saillie (44) de la pièce de marchepied intérieure (41).

19. Bas de caisse du véhicule à portes coulissantes selon la revendication 17, dans lequel la hauteur de la partie supérieure du panneau (9) est déterminée de manière à ce que la traverse (11) se trouve face à une paroi latérale de la pièce adaptable de rail (43).

20. Bas de caisse du véhicule à portes coulissantes selon la revendication 17, dans lequel un élément de support (200) est présent dans une partie de la traverse (11) près d'une jointure entre la traverse (11) et la pièce en saillie (44) de la pièce de marchepied intérieure (41).
